# EUROPEAN PATENT SPECIFICATION

(11) **EP 4 388 953 B1**
(45) Date of publication and mention of the grant of the patent: **04.02.2026**
(21) Application number: 22887571.2
(22) Date of filing: 25.10.2022
(51) Int. Cl.: A47L 7/00, A47L 9/28, A01K 29/00, G06Q 50/22, G06Q 50/10, B25J 11/00, B25J 19/02

(54) **ROBOT VACUUM CLEANER MONITORING COMPANION ANIMAL AND METHOD FOR CONTROLLING SAME**
ROBOTERSTAUBSAUGER ZUR ÜBERWACHUNG VON HAUSTIEREN UND VERFAHREN ZUR STEUERUNG DAVON
ASPIRATEUR ROBOT SURVEILLANT UN ANIMAL DE COMPAGNIE ET SON PROCÉDÉ DE COMMANDE

(30) Priority: 29.10.2021 KR 20210147158
(43) Date of publication of application: 26.06.2024
(73) Proprietor: Samsung Electronics Co., Ltd., Suwon-si, Gyeonggi-do 16677 (KR)
(72) Inventor: JUNG, Jaeyoung, Suwon-si, Gyeonggi-do 16677 (KR); OH, Heungryong, Suwon-si, Gyeonggi-do 16677 (KR)
(74) Representative: Gulde & Partner
(86) International application number: PCT/KR2022/016378
(87) International publication number: WO 2023/075375

(56) References cited:
- KR-A- 20150 020 954
- KR-A- 20200 133 776
- KR-A- 20200 133 776
- KR-A- 20210 083 779
- KR-A- 20210 122 581
- KR-B1- 102 195 066
- US-A1- 2015 342 150
- US-A1- 2015 342 150
- US-A1- 2020 022 335
- US-B2- 8 560 120

## Description

### TECHNICAL FIELD

The invention relates to a robot vacuum cleaner for monitoring a pet, a method of controlling the robot vacuum cleaner, and a recording medium having recorded thereon a computer program for executing the method of controlling the robot vacuum cleaner.

### RELATED ART

A robot vacuum cleaner has an autonomous driving function, an object recognition function through a camera, etc., and a communication function through Wi-Fi. Due to these features, the robot vacuum cleaner may perform various roles in a process of implementing a smart home. As one of service functions provided by the robot vacuum cleaner, research on a pet care function has been conducted. However, location tracking of a pet is required for pet care. However, with the configuration of a current robot vacuum cleaner, the tracking performance of a pet location is limited. Therefore, a configuration that allows the robot vacuum cleaner to accurately track the location of a pet would be an advancement in the state of the art. For example, US 2015/0342150 A1 discloses system for remote care of an animal comprises a housing, a mobility portion coupled to the housing and operable to move the housing, a wireless data communications system disposed within the housing and wirelessly communicatively coupled with an external data communications system, and a microprocessor disposed within the housing and controlling the mobility portion. KR 2020 0133776 A describes an intelligent monitoring method for a pet by a robot capable of realizing a good intelligent monitoring effect according to the pet's activity trajectory. KR 2015 0020954 A describes an emotional response similar to a pet in response to an input signal or a change in external environment, thereby providing a cleaning robot that expresses an emotional response that can play a role similar to a pet.

### DESCRIPTION OF EMBODIMENTS

### TECHNICAL PROBLEM

The present invention relates to a robot vacuum cleaner to accurately identify locations of pets by using an ultra-wideband (UWB) communication function to provide an efficient pet care service. The embodiments of the invention provide a high level of convenience to a user in providing a smart home function, and increase the value and utilization of a smart home appliance.

### TECHNICAL SOLUTION TO PROBLEM

Accordingly, one embodiment of the invention is directed to a method of controlling a robot vacuum cleaner including receiving by a plurality of ultra wideband (UWB) antennas, a UWB signal from a first UWB device; obtaining location information about a pet based on the UWB signal received by the plurality of UWB antennas; and monitoring the pet based on the location information about the pet; detecting a barking sound of the pet using a microphone of the robot vacuum cleaner; generating barking monitoring information about the pet based on the barking sound of the pet; and transmitting the monitoring information about the pet to an external device registered in a same account as an account of the robot vacuum cleaner, wherein the barking monitoring information comprises at least one of information about a time when the barking sound is recognized or location information in which the barking sound is recognized.

Also, an embodiment is directed to the method may further include moving the robot vacuum cleaner to a periphery of the pet based on the obtained location information about the pet.

Also, an embodiment is directed to the method, wherein the first UWB device is mounted on the pet, and the obtaining the location information about the pet includes identifying a location of the first UWB device; and identifying the location of the first UWB device as a location of the pet.

Also, an embodiment is directed to the method, further including receiving expected location information about the pet from a second UWB device including a plurality of microphones, and the second UWB device is configured to generate the expected location information about the pet based on a barking sound detected by the plurality of microphones.

Also, an embodiment is directed to the method, further including moving the robot vacuum cleaner to a location corresponding to the expected location information; recognizing the pet from a photographed image photographed by the robot vacuum cleaner; and identifying location information about the pet based on the photographed image and location information about the robot vacuum cleaner.

Also, an embodiment is directed to the method, wherein the plurality of UWB antennas may be provided in a main body of the robot vacuum cleaner.

Also, an embodiment is directed to the method, wherein the plurality of UWB antennas may be provided in a charger of the robot vacuum cleaner.

Also, an embodiment is directed to the method, wherein the monitoring of the pet includes photographing the pet using a camera of the robot vacuum cleaner to thereby produce a photographed image and transmitting the photographed image to an external device registered in a same account as that of the robot vacuum cleaner.

Also, an embodiment is directed to the method, wherein the monitoring of the pet includes,

Also, an embodiment is directed to the method, further including determining a cleaning region of the robot vacuum cleaner based on the obtained location information about the pet.

Also, an embodiment is directed to the method further including inputting monitoring information collected by an operation of monitoring the pet into a machine learning model; and obtaining identification information about the pet from the machine learning model.

Also, an embodiment is directed to the method further including activating a monitoring mode of the pet, wherein when the monitoring mode of the pet is activated, the method further includes: recording a location of interest at which a barking sound of the pet is detected on a cleaning map, and when the barking sound of the pet is maintained for more than a reference time, recording the location of interest on the cleaning map at a certain period.

Also, an embodiment is directed to the method further including when the monitoring mode of the pet is activated, transmitting to an external device when the barking sound of the pet is detected within a reference distance from a pet-related location related to the pet recorded on the cleaning map, wherein the pet-related location may include at least one of a feeding location, a pet house location, or a a pet relief location.

Also, an embodiment is directed to the method further including, when a plurality of pets are present, detecting a barking sound of at least one pet of the plurality of pets; measuring distances between the plurality of pets while detecting the barking sound of the at least one pet; determining that there is a dispute between the plurality of the pets when the distances between the plurality of the pets are less than or equal to a reference distance and all of the plurality of the pets are barking; and when it is determined that there is the dispute between the plurality of the pets, transmitting information about the dispute between the plurality of the pets to an external device.

Also, an embodiment of the invention is directed to a robot vacuum cleaner including an ultra wideband (UWB) communication module including a plurality of UWB antennas, a moving assembly; a memory storing at least one instruction; and at least one processor configured to execute the at least one instruction to: receive, by the plurality of UWB antennas, a UWB signal from a first UWB device , obtain location information about a pet based on the UWB signal received by the plurality of UWB antennas, and monitor the pet based on the location information about the pet, detect a barking sound of the pet using a microphone of the robot vacuum cleaner, generate barking monitoring information about the pet based on the barking sound of the pet, and transmit the monitoring information about the pet to an external device registered in a same account as an account of the robot vacuum cleaner, wherein the barking monitoring information comprises at least one of information about a time when the barking sound is recognized or location information in which the barking sound is recognized .

Also, an embodiment is directed to the robot vacuum cleaner wherein the at least one processor is further configured to execute the at least one instruction to control the moving assembly to move the robot vacuum cleaner to a periphery of the pet based on the obtained location information about the pet.

Also, an embodiment is directed to the robot vacuum cleaner wherein the first UWB device is mounted on the pet, and the at least one processor is further configured to execute the at least one instruction to: identify the location of the first UWB device, and identify the location of the first UWB device as a location of the pet.

Also, an embodiment is directed to a robot vacuum cleaner including: at least one memory storing instructions; and at least one processor configured to execute the instructions to: obtain location information about a pet based on an ultra wideband (UWB) signal detected by a plurality of UWB antennas, move the robot vacuum cleaner based on the obtained location information about the pet, and monitor the pet by the moved robot vacuum cleaner.

Also, according to an embodiment of the invention, provided is a storage medium having stored thereon a computer program for executing the method of controlling the robot vacuum cleaner in a computer.

### BRIEF DESCRIPTION OF THE DRAWINGS

FIG. 1 is a diagram illustrating a system including a robot vacuum cleaner according to an embodiment of the invention.
FIG. 2 is a diagram illustrating a structure of the robot vacuum cleaner and a first ultra-wideband (UWB) device according to an embodiment of the invention.
FIG. 3 is a diagram illustrating a UWB communication module of a robot vacuum cleaner, and the UWB communication module detecting a UWB signal output from a first UWB device according to an embodiment of the invention.
FIG. 4 is a diagram illustrating structures of a robot vacuum cleaner, a charger, and a first UWB device according to an embodiment of the invention.
FIG. 5 is a diagram showing a charger detecting a location of a pet according to an embodiment of the invention.
FIG. 6 is a flowchart illustrating a method of controlling a robot vacuum cleaner according to an embodiment of the invention.
FIG. 7 is a diagram illustrating a robot vacuum cleaner and an artificial intelligence (AI) server according to an embodiment of the invention.
FIG. 8 is a diagram illustrating structures of a first UWB device and a robot vacuum cleaner according to an embodiment of the invention.
FIG. 9 is a diagram illustrating a process of identifying location information about a pet, according to an embodiment of the invention.
FIG. 10 is a diagram illustrating types of UWB parameters obtained from a UWB signal according to an embodiment of the invention.
FIG. 11 is a diagram illustrating a process of calculating an Angle of Arrival (AoA) azimuth result value and an AoA elevation result value according to an embodiment of the invention.
FIG. 12 is a diagram illustrating an operation of monitoring a pet according to an embodiment of the invention.
FIG. 13 is a flowchart illustrating an operation in which a robot vacuum cleaner captures and monitors a pet according to an embodiment of the invention.
FIG. 14 is a flowchart illustrating an operation in which a robot vacuum cleaner monitors barking of a pet according to an embodiment of the invention.
FIG. 15 is a diagram illustrating barking monitoring information according to an embodiment of the invention.
FIG. 16 is a diagram illustrating barking monitoring information according to an embodiment of the invention.
FIG. 17 is a diagram illustrating barking monitoring information according to an embodiment of the invention.
FIG. 18 is a diagram illustrating barking monitoring information according to an embodiment of the invention.
FIG. 19 is a flowchart illustrating an operation in which a robot vacuum cleaner performs barking monitoring, according to an embodiment of the invention.
FIG. 20 is a flowchart illustrating a process in which a robot vacuum cleaner detects a dispute between pets according to an embodiment of the invention.
FIG. 21 is a flowchart illustrating a process of outputting specified content for a pet according to an embodiment of the invention.
FIG. 22 is a diagram illustrating a process of determining whether a pet is located in the periphery of a display device while specified content is reproduced, according to an embodiment of the invention.
FIG. 23 is a diagram illustrating a process of generating evaluation information according to output of specified content, according to an embodiment of the invention.
FIG. 24 is a diagram illustrating a process of installing a dedicated application for managing output of specified content on a display device, according to an embodiment of the invention.
FIG. 25 is a diagram illustrating a method of identifying a location of a pet by using a second UWB device and a robot vacuum cleaner according to an embodiment of the invention.
FIG. 26 is a diagram illustrating a process in which a second UWB device identifies expected location information about a pet, according to an embodiment of the invention.
FIG. 27 is a diagram illustrating a process of estimating a sound source direction based on barking sound detected by a second UWB device and barking sound detected by a robot vacuum cleaner according to an embodiment of the invention.
FIG. 28 is a diagram illustrating a process of starting a monitoring mode based on a user input according to an embodiment of the invention.
FIG. 29 is a block diagram of a structure of a robot vacuum cleaner, according to an embodiment of the invention.
FIG. 30 is a block diagram of a mobile device in a network environment, according to various embodiments of the invention.

### BEST MODE

Accordingly, one embodiment of the invention is directed to a method of controlling a robot vacuum cleaner including receiving by a plurality of ultra wideband (UWB) antennas, a UWB signal from a first UWB device; obtaining location information about a pet based on the UWB signal received by the plurality of UWB antennas; and monitoring the pet based on the location information about the pet.

Also, an embodiment of the invention is directed to a robot vacuum cleaner including an ultra wideband (UWB) communication module including a plurality of UWB antennas, a moving assembly; a memory storing at least one instruction; and at least one processor configured to execute the at least one instruction to: receive, by the plurality of UWB antennas, a UWB signal from a first UWB device , obtain location information about a pet based on the UWB signal received by the plurality of UWB antennas, and monitor the pet based on the location information about the pet .

Also, according to an embodiment of the invention, provided is a storage medium having stored thereon, a computer program for executing the method of controlling the robot vacuum cleaner in a computer.

### DETAILED DESCRIPTION

The present specification describes and discloses principles of embodiments of the invention such that the scope of right of claims are clarified and one of ordinary skill in the art may implement embodiments of the invention described in the claims. The embodiments of the invention may be implemented in various forms.

Throughout the specification, like reference numerals denote like elements. The present specification does not describe all elements of the embodiments of the invention, and generic content in the technical field of the invention or redundant content of the embodiments of the invention is omitted. The term "module" or "unit" used in the specification may be implemented in software, hardware, firmware, or a combination thereof, and according to embodiments of the invention, a plurality of "modules" or "units" may be implemented as one element or one "module" or "unit" may include a plurality of elements.

In the description of embodiments of the invention, certain detailed explanations of related art are omitted when it is deemed that they may unnecessarily obscure the essence of the invention. Also, numbers (for example, a first, a second, etc.) used in the description of the specification are merely identifier codes for distinguishing one element from another.

Also, in the present specification, it will be understood that when elements are "connected" or "coupled" to each other, the elements may be directly connected or coupled to each other, but may alternatively be connected or coupled to each other with one or more intervening elements there between, unless specified otherwise.

Hereinafter, operation principles and various embodiments of the invention will be described with reference to accompanying drawings.

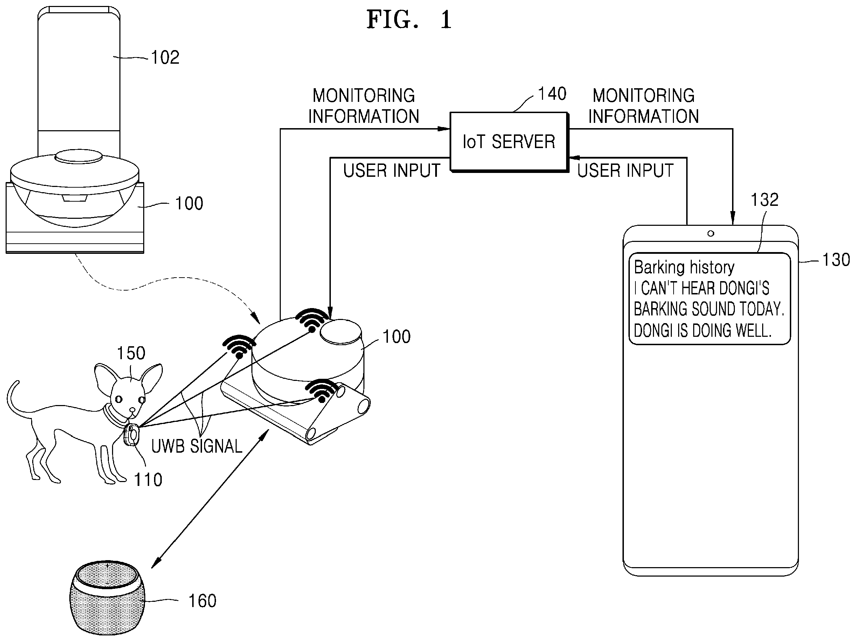

FIG. 1 is a diagram illustrating a system including a robot vacuum cleaner 100 according to an embodiment of the invention.

The robot vacuum cleaner 100 is a cleaner having a driving function. The robot vacuum cleaner 100 has a function of autonomously driving while avoiding obstacles within a driving region in a home. The robot vacuum cleaner 100 is docked with a charger 102 to charge power. The robot vacuum cleaner 100 includes a battery and receives power from the charger 102 to charge the battery.

The pet 150 is an animal that resides at home. The pet 150 may correspond to various types of animals such as dog, cat, etc.

According to an embodiment of the invention, the robot vacuum cleaner 100 includes an ultra wideband (UWB) communication module. The UWB communication module of the robot vacuum cleaner 100 includes three UWB antennas disposed at different locations.

UWB is a short-range radio frequency (RF) communication technology capable of measuring a distance at an accuracy of several centimeters using a wideband frequency equal to or greater than 500 MHz and using a pulse with a length of about 2 nanoseconds (nano: one billionth of a second). UWB transmits and receives at low power over a wide frequency band, and hardly interferes with other wireless technologies, and thus UWB may be used together with other wireless technologies such as NFC, Bluetooth or Wi-Fi. UWB technology is known for its excellent performance such as accuracy, power consumption, wireless connection stability and security in a complex environment in which people are crowded such as parking lots, hospitals, and airports.

According to an embodiment of the invention, a first UWB device 110 is mounted on the body of the pet 150, and the robot vacuum cleaner 100 detects a UWB signal output from the first UWB device 110. The robot vacuum cleaner 100 detects the UWB signal output from the first UWB device 110 by using three UWB antennas.

According to an embodiment of the invention, the first UWB device 110 is not mounted on the pet 150, and the robot vacuum cleaner 100 identifies the pet 150 by using a UWB signal output from a second UWB device 160 at home. The second UWB device 160 includes a microphone and a UWB communication module. The second UWB device 160 may detect barking sound of the pet 150 by using a microphone, and estimate a region in which the pet 150 exists using a direction in which the barking sound of the pet 150 is heard. The robot vacuum cleaner 100 may move to the region estimated by the second UWB device 160 to identify the location of the pet 150. The second UWB device 160 may correspond to, for example, an Al speaker.

According to an embodiment of the invention, the robot vacuum cleaner 100 may not include the UWB communication module, and the charger 102 may include the UWB communication module. The UWB communication module of the charger 102 may include three UWB antennas, and identify the location of the pet 150 by using the UWB signal output from the first UWB device 110 or the second UWB device 160 of the pet 150. When the charger 102 identifies the location of the pet 150, the charger 102 transmits location information about the pet 150 to the robot vacuum cleaner 100.

The robot vacuum cleaner 100 communicates with an Internet of things (loT) server 140. The robot vacuum cleaner 100 communicates with the loT server 140 through a certain access point (AP) device (not shown). The loT server 140 is a server that provides various loT functions, and may correspond to a remote cloud server.

The loT server 140 stores a plurality of pieces of account information, and each of devices registered in the loT server 140 is connected to one account among the plurality of accounts. Accordingly, the robot vacuum cleaner 100 is connected to one account among the plurality of accounts registered in the loT server 140. The robot vacuum cleaner 100 communicates with other loT devices connected to the same account through the loT server 140. The other loT devices may correspond to, for example, a communication terminal, a refrigerator, washing machine, an air conditioner, TV, an air purifier, induction, an Al speaker, a wearable device, a laptop computer, a cleaner, a smart cooking appliance, a clothing management appliance, etc.

According to an embodiment of the invention, the robot vacuum cleaner 100 identifies the location of the pet 150 and monitors the pet 150 in a periphery of the pet 150, such as the neck, or other area where the UWB device 110 is located. Also, the robot vacuum cleaner 100 generates information obtained by monitoring the pet 150 and transmits the same to an external device 130 through the loT server 140. The external device 130 corresponds to, for example, the other loT device described above. The external device 130 is a device registered in the same account of the loT server 140 with the robot vacuum cleaner 100. In one embodiment described here, the external device 130 is a smartphone. However, the embodiment of the invention is not limited to a configuration in which the external device 130 corresponds to the smartphone, and the external device 130 may correspond to various types of loT devices.

The external device 130 receives monitoring information from the robot vacuum cleaner 100 and outputs a monitoring notification 132. The monitoring notification 132 may include status information, event information, history information, image information, audio information, etc. of the pet 150.

Also, the external device 130 may transmit a user input requesting monitoring or care of the pet 150 to the robot vacuum cleaner 100. The external device 130 may execute a certain application and request monitoring or care from the robot vacuum cleaner 100 through the application. The robot vacuum cleaner 100 moves to various areas around the pet 150, such as to the periphery of the pet 150 based on the user input to monitor the pet 150, perform a care function, or collect status information. Also, the robot vacuum cleaner 100 transmits the monitoring information about the pet 150 to the external device 130.

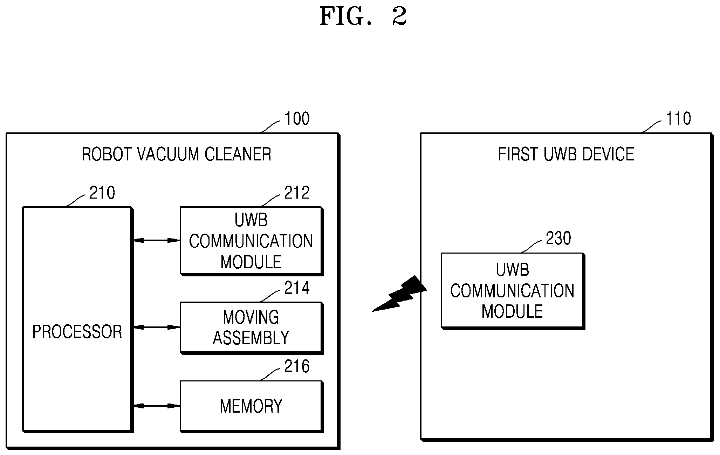

FIG. 2 is a diagram illustrating a structure of each of the robot vacuum cleaner 100 and the first UWB device 110 according to an embodiment of the invention.

The robot vacuum cleaner 100 according to an embodiment of the invention is a cleaner having a driving function and a cleaning function. The robot vacuum cleaner 100 performs cleaning wirelessly while driving in a space, or area, to be cleaned.

The robot vacuum cleaner 100 includes a processor 210, a UWB communication module 212, a moving assembly 214, and a memory 216.

The processor 210 controls the overall operation of the robot vacuum cleaner 100. The processor 210 may be implemented as one or more processors. The processor 210 may execute an instruction or a command stored in the memory 216 to perform a certain operation.

The UWB communication module 212 generates a UWB signal and detects the UWB signal. The UWB communication module 212 includes at least one UWB antenna. According to an embodiment of the invention, the UWB communication module 212 may include three UWB antennas. The UWB communication module 212 analog-digital converts the UWB signal detected from the UWB antenna. In addition, the digitally converted UWB signal is transmitted to the processor 210 or the memory 216.

The UWB communication module 212 receives a UWB signal output from the first UWB device 110, which has a UWB communication module 230. The UWB communication module 212 detects the UWB signal output from the first UWB device 110 by using three UWB antennas. The UWB communication module 212 detects the UWB signal output from the first UWB device 110 at three points by using three UWB antennas.

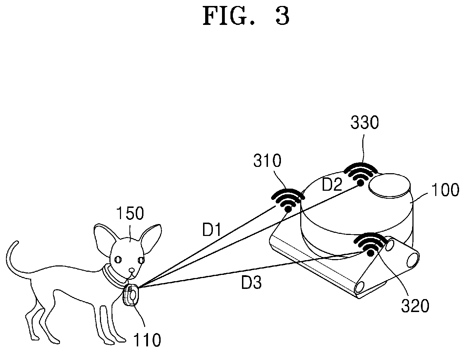

FIG. 3 is a diagram illustrating the UWB communication module 212 shown in FIG. 2, of the robot vacuum cleaner 100 detecting a UWB signal output from the first UWB device 110 according to an embodiment of the invention.

As shown in FIG. 3, the robot vacuum cleaner 100 includes three UWB antennas 310, 320, and 330 at different locations. According to an embodiment of the invention, the three UWB antennas 310, 320, 330 are disposed at the same height. The three UWB antennas 310, 320, and 330 at different locations detect UWB signals output from the first UWB device 110 at respective points. By using the UWB signals detected from the three UWB antennas 310, 320, and 330, distances D1, D2, and D3 between the first UWB device 110 and the respective UWB antennas 310, 320, and 330 may be measured. A method of measuring the distances D1, D2, and D3 between the first UWB device 110 and the respective UWB antennas 310, 330 and 320 and a method of identifying the location of the pet 150 will be described in detail below.

The configuration of the robot vacuum cleaner 100 will be described again with reference to FIG. 2.

The processor 210 identifies the location of the pet 150 by using the UWB signal detected by the UWB communication module 212. The processor 210 may identify the location of the pet 150 by using payload data of the UWB signal according to a method defined in the UWB communication standard.

The location of the pet 150 may be defined on a certain three-dimensional (3D) coordinate system. According to an embodiment of the invention, the location of the pet 150 may be defined on the 3D coordinate system with respect to the location of the robot vacuum cleaner 100.

The moving assembly 214 moves the robot vacuum cleaner 100. The moving assembly 214 may be disposed on a lower surface of the robot vacuum cleaner 100 to move the robot vacuum cleaner 100 forward and backward, and rotate the robot vacuum cleaner 100. The moving assembly 214 may include a pair of wheels respectively disposed on left and right edges with respect to the central region of a main body of the robot vacuum cleaner 100. In addition, the moving assembly 214 may include a wheel motor that applies a moving force to each wheel, and a caster wheel that is installed in front of the main body and rotates according to a state of a floor surface on which the robot vacuum cleaner 100 moves to change an angle. The pair of wheels may be symmetrically disposed on the main body of the robot vacuum cleaner 100.

The processor 210 controls the movement of the robot vacuum cleaner 100 by controlling the moving assembly 214. The processor 210 sets a driving path of the robot vacuum cleaner 100 based on cleaning map information. In addition, the processor 210 drives the moving assembly 214 to move the robot vacuum cleaner 100 along the driving path. To this end, the processor 210 generates a driving signal for controlling the moving assembly 214 and outputs the same to the moving assembly 214. The moving assembly 214 drives each component of the moving assembly 214 based on the driving signal output from the processor 210.

The processor 210 may control the moving assembly 214 to move to the periphery of the pet 150 based on the location of the pet 150. For example, the processor 210 may control the moving assembly 214 to move a region (e.g., bedroom 1, living room, kitchen, etc.) at home in which the pet 150 is located.

Also, the processor 210 monitors the pet 150 based on the location of the pet. The processor 210 performs various monitoring operations by controlling the moving assembly 214 to move to the periphery of the pet 150 based on the location of the pet.

The memory 216 stores various types of information, data, a set of instructions, a program, etc. necessary for the operation of the robot vacuum cleaner 100. The memory 216 may store map information.

The memory 216 may be configured in at least one of a volatile memory or a nonvolatile memory, or a combination thereof. The memory 216 may include at least one type of storage medium among a flash memory type, a hard disk type, a multimedia card micro type, a card type memory (e.g., a secure digital (SD) or an extreme digital (XD) memory), random access memory (RAM), static RAM (SRAM), read-only memory (ROM), electrically erasable programmable ROM (EEPROM), programmable ROM (PROM), a magnetic memory, a magnetic disk, or an optical disk. Also, the memory 216 may correspond to a web storage or a cloud server performing a storing function on the Internet.

The first UWB device 110 is a device mounted on the pet 150. The first UWB device 110 may be implemented as various types of electronic devices. For example, the first UWB device 110 may be implemented in the form of a smart tag, a wearable device, etc.

The first UWB device 110 includes a UWB communication module 230. The UWB communication module 230 outputs a UWB signal. The first UWB device 110 may further include components such as a processor, a memory, a battery, etc., in addition to the UWB communication module 230.

The first UWB device 110 outputs a UWB signal at a preset timing. According to an embodiment of the invention, the first UWB device 110 outputs the UWB signal at a certain period. According to an embodiment of the invention, when a UWB signal output request is input from the external device 130 (shown in FIG. 1) or the loT server 140 (shown in FIG. 1), the first UWB device 110 outputs the UWB signal at a certain period.

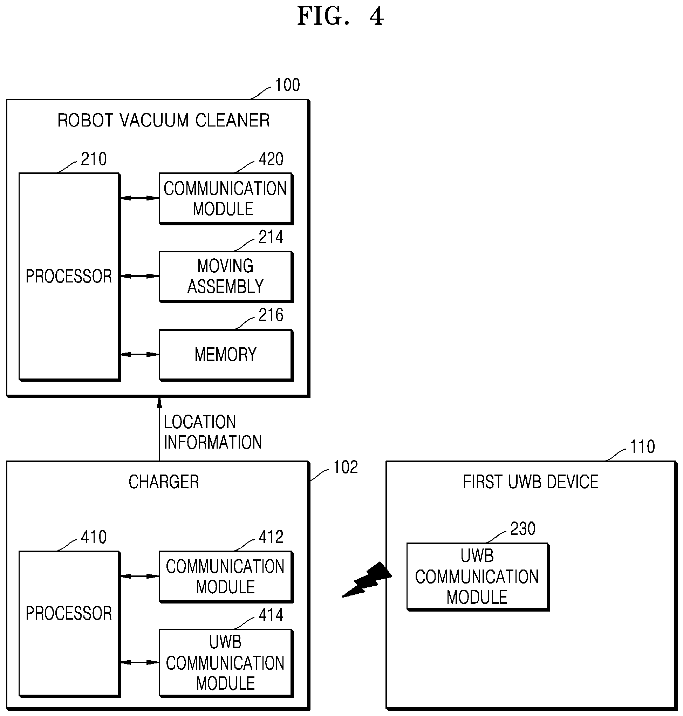

FIG. 4 is a diagram illustrating structures of the robot vacuum cleaner 100, the charger 102, and the first UWB device 110 according to an embodiment of the invention.

According to an embodiment of the invention, instead of the robot vacuum cleaner 100, the charger 102 detects a UWB signal output from the first UWB device 110. The robot vacuum cleaner 100 has a processor 210, communication module 420, moving assembly 214 and a memory 216. The charger 102 includes a processor 410, a communication module 412, and a UWB communication module 414.

The UWB communication module 414 of the charger 102 includes three UWB antennas. The UWB communication module 414 detects the UWB signal output from the first UWB device 110 by using three UWB antennas. The processor 410 measures a distance between each UWB antenna and the UWB communication module 230 of the first UWB device 110 from the UWB signal detected from each of the three UWB antennas of the UWB communication module 414.

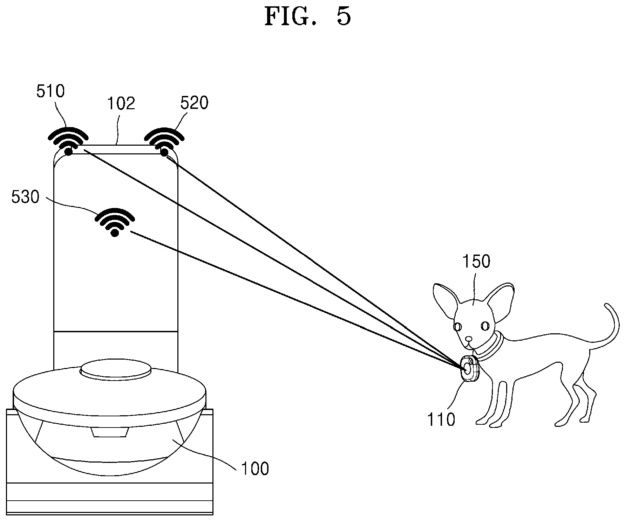

FIG. 5 is a diagram illustrating a process in which the charger 102 detects a location of the pet 150 according to an embodiment of the invention. The robot vacuum cleaner 100 is disposed in the charger 102.

According to an embodiment of the invention, the charger 102 includes three UWB antennas 510, 520, 530 at different locations. According to an embodiment of the invention, the three UWB antennas 510, 520, and 530 may be disposed at the same height. The three UWB antennas 510, 520, and 530 at different locations detect UWB signals output from the first UWB device 110 at respective points. By using the UWB signals detected from the three UWB antennas 510, 520, and 530, the distances D1, D2, and D3, each distance associated with a UWB antenna 510, 520 and 530, between the first UWB device 110 and the respective UWB antennas 510, 520, and 530 may be measured. A method of measuring the distances D1, D2, and D3 between the first UWB device 110 and the respective UWB antennas 510, 520, and 530 and a method of identifying the location of the pet 150 will be described in detail below.

The configuration of the robot vacuum cleaner 100 will be described with reference to FIG. 4 again.

According to an embodiment of the invention, the processor 410 of the charger 102 uses the UWB signal detected by the UWB communication module 412 to identify the location of the pet 150. The processor 410 may identify the location of the pet 150 by using payload data of the UWB signal according to a method defined in the UWB communication standard. The processor 410 transmits location information about the pet 150 to the robot vacuum cleaner 100 through the communication module 412.

The robot vacuum cleaner 100 receives the location information transmitted from the charger 102 through a communication module 420. The processor 210 of the robot vacuum cleaner 100 identifies the location of the pet 150 by using the location information received from the charger 102.

According to an embodiment of the invention, the processor 410 of the charger 102 transmits the payload data of the UWB signal detected by the UWB communication module 412 to the robot vacuum cleaner 100. The robot vacuum cleaner 100 identifies the location of the pet 150 by using the payload data received from the charger 102.

The location of the pet 150 may be defined on a certain 3D coordinate system. According to an embodiment of the invention, the location of the pet 150 may be defined on the 3D coordinate system with respect to a location of the charger 102.

The robot vacuum cleaner 100 identifies the location of the pet 150 by using the location information provided from the charger 102, and monitors the pet 150 based on the location information about the pet 150.

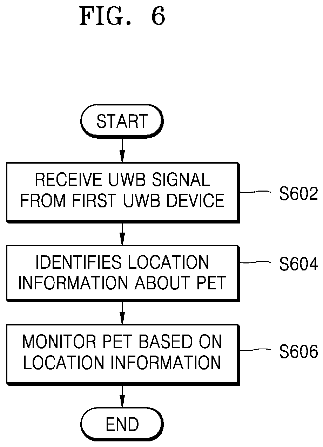

FIG. 6 is a flowchart illustrating a method of controlling the robot vacuum cleaner 100 according to an embodiment of the invention.

The method of controlling the robot vacuum cleaner 100 according to an embodiment of the invention may be performed by the robot vacuum cleaner 100 according to embodiments of the invention.

First, in operation S602, the robot vacuum cleaner 100 receives a UWB signal from the first UWB device 110. According to an embodiment of the invention, the robot vacuum cleaner 100 includes three UWB antennas, and detects the UWB signal output from the first UWB device 110 using the three UWB antennas.

Next, in operation S604, the robot vacuum cleaner 100 identifies location information about the pet 150 by using the UWB signal received using the UWB antenna. The robot vacuum cleaner 100 calculates a distance between each UWB antenna and the first UWB device 110 attached to the pet 150 by using the received UWB signal. The robot vacuum cleaner 100 identifies the location information about the pet 150 based on the distance between each UWB antenna and the first UWB device 110.

According to an embodiment of the invention, the robot vacuum cleaner 100 does not include a UWB antenna or includes only one UWB antenna, and the charger 102 includes three UWB antennas. In this case, in operation S602, the charger 102 detects the UWB signal output from the first UWB device 110 by using the three UWB antennas. The charger 102 transmits distance information (e.g., Time of Flight (ToF) result) of the UWB signal detected by using the three UWB antennas or the location information calculated using the UWB signal to the robot vacuum cleaner 100. The robot vacuum cleaner 100 receives the distance information or the location information about the UWB signal detected from the charger 102. Also, in operation S604, the robot vacuum cleaner 100 identifies location information about the pet 150 by using the distance information or the location information about the UWB signal received from the charger 102.

Next, in operation S606, the robot vacuum cleaner 100 monitors the pet 150 based on the location information about the pet 150. The robot vacuum cleaner 100 moves to the periphery of the pet 150 based on the location information about the pet 150. The robot vacuum cleaner 100 performs a certain monitoring operation in the periphery of the pet 150. The monitoring operation may include, for example, capturing the pet 150, detecting barking sound of the pet 150, playing music, operating an air purifier, controlling the temperature, setting a quiet mode upon cleaning, controlling the lighting, or reproducing a TV program, or turning on an appliance, such as a TV, etc.

The robot vacuum cleaner 100 collects monitoring information while performing the monitoring operation. The monitoring information may include one or more photographed image, barking sound recording data, a behavior history of the pet 150, and operation state information about an loT device related to the monitoring operation. The robot vacuum cleaner 100 transmits the monitoring information to the loT server 140 (shown in FIG. 1). The robot vacuum cleaner 100 transmits the monitoring information to the loT server 140 through an AP device (not shown) at the home. The loT server 140 transmits the monitoring information received from the robot vacuum cleaner 100 to the external device 130.

The external device 130 outputs the monitoring information. The external device 130 may output the monitoring information using a certain application.

Also, the external device 130 receives a user input through the certain application, and transmits the received user input to the robot vacuum cleaner 100 through the loT server 140. The external device 130 may receive the user input based on the output of the monitoring information or may receive the user input at an arbitrary time. The robot vacuum cleaner 100 may perform the monitoring operation based on the user input received from the external device 130. For example, the robot vacuum cleaner 100 may move to the periphery of the pet 150 and perform the certain monitoring operation based on the user input received from the external device 130.

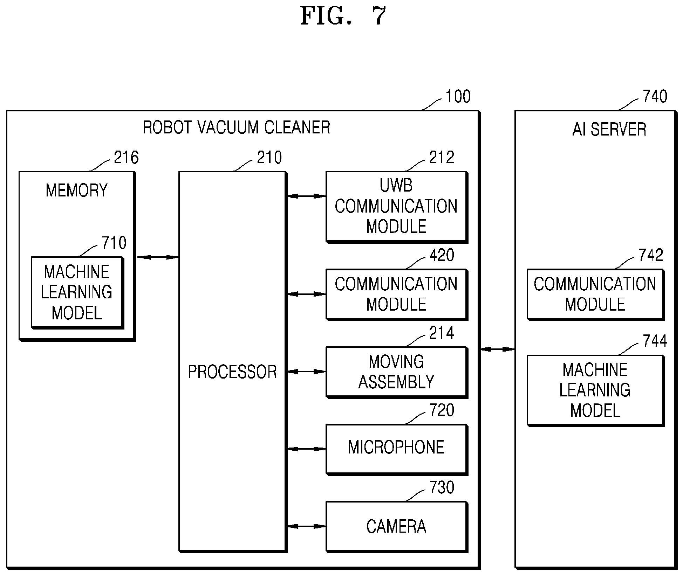

FIG. 7 is a diagram illustrating the robot vacuum cleaner 100 and an Al server 740 according to an embodiment of the invention.

According to an embodiment of the invention, the robot vacuum cleaner 100 may generate identification information about the pet 150 by using machine learning models 710 and 744. The machine learning models 710 and 744 may receive monitoring information collected by the robot vacuum cleaner 100 and output the identification information in a certain form.

According to the invention, the robot vacuum cleaner 100 includes the processor 210, the UWB communication module 212, the communication module 420, the moving assembly 214, the memory 216, a microphone 720, and a camera 730. The processor 210, the UWB communication module 212, the moving assembly 214, and the memory 216 of FIG. 7 correspond to the configuration described with reference to FIG. 2. Accordingly, differences from those described with reference to FIG. 2 will be mainly described in FIG. 7.

The microphone 720 detects sound. The microphone 720 may detect barking sound of the pet 150. The processor 210 recognizes the barking sound of the pet 150 from an audio signal detected by the microphone 720.

According to the invention, the processor 210 detects the barking sound of the pet 150 from the audio signal by using a previously stored audio signal pattern of the barking sound. For example, the memory 216 stores the audio signal pattern of the barking sound of the pet 150. The processor 210 compares the previously stored audio signal pattern of the barking sound with the audio signal detected by the microphone 720 to recognize the barking sound of the pet 150.

According to an embodiment of the invention, the robot vacuum cleaner 100 recognizes the barking sound of the pet 150 from the audio signal using the machine learning models 710 and 744. The processor 210 may input the audio signal to the machine learning models 710 and 744 and obtain a recognition result of the barking sound from the machine learning models 710 and 744. The machine learning models 710 and 744 may include a structure such as a convolutional neural network (CNN) or a recurrent neural network (RNN). The machine learning models 710 and 744 may be models machine-learned by a plurality of pieces of training data including the audio signal and the recognition result of the barking sound.

According to an embodiment of the invention, the machine learning models 710 and 744 recognize sound of a plurality of classes from the audio signal. The sound of the plurality of classes may include, for example, animal barking sound, human voice, phone ringing sound, etc. The processor 210 may determine whether the barking sound of the pet 150 is detected from the detected audio signal based on the output of the machine learning models 710 and 744 to recognize the barking sound of the pet 150.

According to an embodiment of the invention, the machine learning model 710 may be executed in the robot vacuum cleaner 100. The processor 210 may execute a program code of the machine learning model 710 stored in the memory 216 to perform an operation of the machine learning model 710.

According to invention, the machine learning model 744 is executed on the Al server 740. When the machine learning model 744 is executed in the Al server 740, the robot vacuum cleaner 100 transmits the detected audio signal to the Al server 740, and receives the recognition result of the barking sound from the Al server 740. The robot vacuum cleaner 100 communicates with the Al server 740 through the communication module 420. The Al server 740 may include a communication module 742 and communicate with the robot vacuum cleaner 100 through the communication module 742.

The camera 730 captures peripherals of the robot vacuum cleaner 100. The processor 210 may recognize an object in front by using a photographed image photographed by the camera 730. The processor 210 may recognize an obstacle in front from the photographed image. When the obstacle is recognized, the processor 210 may set a driving path to avoid the obstacle. Also, the processor 210 recognizes the pet 150 from the photographed image. The processor 210 recognizes the pet 150 using a certain image recognition program.

According to an embodiment of the invention, the robot vacuum cleaner 100 recognizes the pet 150 from the photographed image by using the machine learning models 710 and 744. The machine learning models 710 and 744 that recognize the barking sound of the pet 150 from the audio signal and the machine learning models 710 and 744 that recognize the pet 150 from the photographed image may correspond to separate machine learning models. The processor 210 may input the photographed image into the machine learning models 710 and 744 and obtain a pet recognition result from the machine learning models 710 and 744. The machine learning models 710 and 744 may include a structure such as a CNN or a RNN. The machine learning models 710 and 744 may be machine-learned models based on a plurality of pieces of training data including the photographed image and the pet recognition result. According to an embodiment of the invention, the machine learning models 710 and 744 recognize objects of a plurality of classes from the photographed image. The objects of the plurality of classes may include objects such as animal, people, sky, tree, wall, floor, etc. The processor 210 may recognize the pet 150 by determining whether the animal is detected from the photographed image based on the output of the machine learning models 710 and 744.

According to an embodiment of the invention, the machine learning model 710 may be executed in the robot vacuum cleaner 100. The processor 210 may execute a program code of the machine learning model 710 stored in the memory 216 to perform an operation of the machine learning model 710.

According to an embodiment of the invention, the machine learning model 744 may be executed on the Al server 740. When the machine learning model 744 is executed in the Al server 740, the robot vacuum cleaner 100 transmits the detected photographed image to the Al server 740, and receives the pet recognition result from the Al server 740. The robot vacuum cleaner 100 may communicate with the Al server 740 through the communication module 420. The Al server 740 may include a communication module 742 and may communicate with the robot vacuum cleaner 100 through the communication module 742.

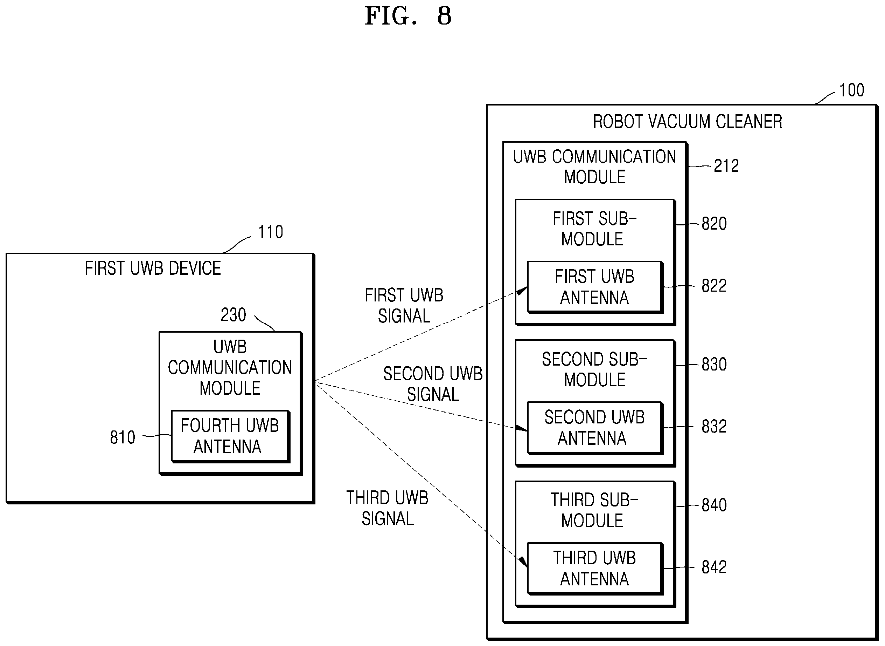

FIG. 8 is a diagram illustrating structures of the first UWB device 110 and the robot vacuum cleaner 100 according to an embodiment of the invention.

The robot vacuum cleaner 100 includes the UWB communication module 212, and the first UWB device 110 includes the UWB communication module 230. The UWB communication module 212 of the robot vacuum cleaner 100 includes a plurality of sub-modules 820, 830, and 840. According to an embodiment of the invention, the robot vacuum cleaner 100 includes three sub-modules 820, 830, and 840. In FIG. 8, an embodiment in which the UWB communication module 212 of the robot vacuum cleaner 100 includes the three sub-modules 820, 830, and 840 is mainly described, but the embodiment of the invention is not limited thereto. For example, it is also possible that the UWB communication module 212 of the robot vacuum cleaner 100 includes two of the sub-modules 820, 830, and 840.

The UWB communication module 230 of the first UWB device 110 includes a fourth UWB antenna 810. In addition, the UWB communication module 230 of the first UWB device 110 may include a signal modulation circuit, a signal detection circuit, an analog-to-digital conversion circuit, a digital-to-analog conversion circuit, an amplifier circuit, etc. The fourth antenna 810 outputs a UWB signal. The UWB signal output from the fourth antenna 810 may include identification information about the first UWB device 110.

The UWB communication module 212 of the robot vacuum cleaner 100 includes the first sub-module 820, the second sub-module 830, and the third sub-module 840. The first sub-module 820 includes a first UWB antenna 822. The second sub-module 830 includes a second UWB antenna 832. The third sub-module 840 includes a third UWB antenna 842. Each of the first sub-module 820, the second sub-module 830, and the third sub-module 840 may include a signal modulation circuit, a signal detection circuit, an analog-to-digital conversion circuit, a digital-to-analog conversion circuit, an amplifier circuit, etc.

The first sub-module 820 of the robot vacuum cleaner 100 detects a UWB signal through the first UWB antenna 822. The second sub-module 830 of the robot vacuum cleaner 100 detects a UWB signal through the second UWB antenna832. The third sub-module 840 of the robot vacuum cleaner 100 detects a UWB signal through the third UWB antenna 842. For convenience of description, the UWB signal detected by the first UWB antenna 822 is referred to as a first UWB signal, the UWB signal detected by the second UWB antenna 832 is referred to as a second UWB signal, and the UWB signal detected by the third UWB antenna 842 is referred to as a third UWB signal.

The UWB signal output from the first UWB device 110 includes time stamp information. The time stamp information is information about a time at which each signal is transmitted. The robot vacuum cleaner 100 obtains time stamp information included in each of the first UWB signal, the second UWB signal, and the third UWB signal. In addition, the robot vacuum cleaner 100 identifies a time at which the first UWB signal reaches the first UWB antenna 822, identifies a time at which the second UWB signal reaches the second UWB antenna 832, and identifies a time at which the third UWB signal reaches the third UWB antenna 842.

According to an embodiment of the invention, the first UWB antenna 822, the second UWB antenna 832, and the third UWB antenna 842 are disposed at the same height from the floor of the robot vacuum cleaner 100.

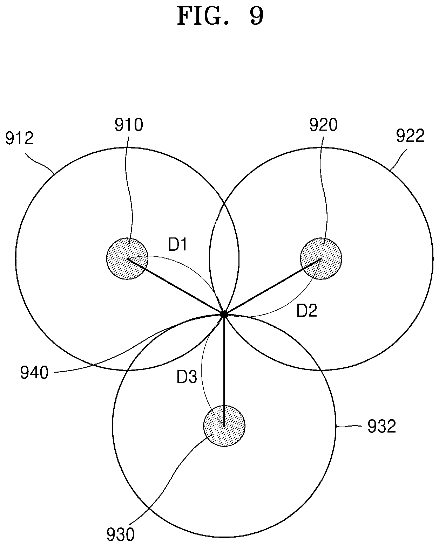

FIG. 9 is a diagram illustrating a process of identifying location information 940 of the pet 150, according to an embodiment of the invention.

The robot vacuum cleaner 100 identifies the location information of the pet 150 based on a plurality of detected UWB signals. The robot vacuum cleaner 100 may calculate a distance between each of the first UWB antenna 822, the second UWB antenna 832, and the third UWB antenna 842 of the robot vacuum cleaner 100 and the fourth UWB antennas 810 of the first UWB device 110 based on the plurality of UWB signals. The robot vacuum cleaner 100 identifies an arrival time at which the UWB signal of the first UWB device 110 reaches each of the first UWB antenna 822, the second UWB antenna 832, and the third UWB antenna 842 of the robot vacuum cleaner 100. The robot vacuum cleaner 100 calculates a ToF value based on the time stamp information about the first UWB signal and the arrival time. The robot vacuum cleaner 100 calculates the first distance D1 between the fourth UWB antenna 810 and the first UWB antenna 822 based on the ToF value of the first UWB signal. In a similar manner, the robot vacuum cleaner 100 calculates the second distance D2 between the fourth UWB antenna 810 and the second UWB antenna 832 based on the second UWB signal. Also, in a similar manner, the robot vacuum cleaner 100 calculates the third distance D3 between the fourth UWB antenna 810 and the third UWB antenna 842 based on the third UWB signal.

The robot vacuum cleaner 100 identifies the location information 940 of the pet 150 based on the first distance D1, the second distance D2, and the third distance D3.

As described above, the robot vacuum cleaner 100 calculates the first distance D1, the second distance D2, and the third distance D3 using a plurality of UWB signals. The robot vacuum cleaner 100 calculates coordinates of the first UWB device 110 in a coordinate system in which locations of the first UWB antenna 822, the second UWB antenna 832, and the third UWB antenna 842 are defined. The robot vacuum cleaner 100 defines a first circle 912, having center area 910, with respect to coordinates of the first UWB antenna 822 and having the first distance D1 as a radius. Also, the robot vacuum cleaner 100 defines a second circle 922, having center area 920, with respect to coordinates of the second UWB antenna 832 and having the second distance D2 as a radius. Also, the robot vacuum cleaner 100 defines a third circle 932, having a center area 930, with respect to coordinates of the third UWB antenna 842 and having the third distance D3 as a radius. The robot vacuum cleaner 100 defines a contact point 940 of the first circle 912, the second circle 922, and the third circle 932 as the coordinates of the first UWB device 110. The robot vacuum cleaner 100 identifies the coordinates of the first UWB device 110 as the location information of the pet 150.

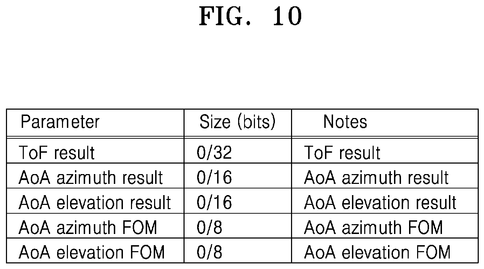

FIG. 10 is a diagram illustrating types of UWB parameters obtained from a UWB signal according to an embodiment of the invention.

The robot vacuum cleaner 100 calculates a plurality of parameters based on the UWB signal received from the first UWB device 110. The processor 210 of the robot vacuum cleaner 100 calculates values of parameters of a Payload IE Content field of a Ranging Result Report Message defined in the UWB standard by using a plurality of UWB signals received from the UWB communication module 212. The processor 210 may calculate the parameters defined in the UWB standard by executing an instruction related to a UWB service.

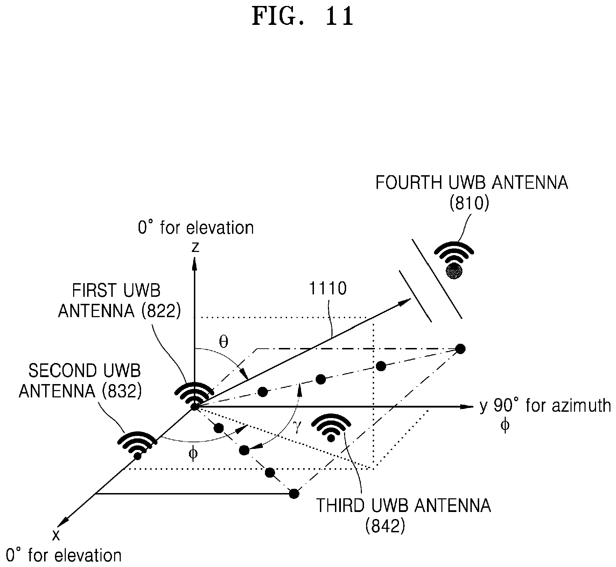

The processor 210 calculates a ToF value with respect to each of the plurality of UWB signals. The processor 210 may calculate distance information corresponding to each UWB signal by using the ToF value. For example, the processor 210 calculates a first distance corresponding to a first UWB signal, a second distance corresponding to a second UWB signal, and a third distance corresponding to a third UWB signal using the ToF value of each UWB signal
The processor 210 calculates an Angle of Arrival (AoA) azimuth result value and an AoA elevation result value based on the first distance, the second distance, and the third distance. A process of calculating the AoA azimuth result value and the AoA elevation result value is described with reference to FIG. 11. FIG. 10 shows a column for size (bits) and a column for notes.

FIG. 11 is a diagram illustrating a process of calculating an AoA azimuth result value and an AoA elevation result value according to an embodiment of the invention.

According to an embodiment of the invention, the robot vacuum cleaner 100 defines a coordinate system having one of the plurality of UWB antennas 822, 832, and 842 of the robot vacuum cleaner 100 as an origin. According to an embodiment of the invention, a location of one of the first UWB antenna 822 and the second UWB antenna 832 disposed on the front side of the robot vacuum cleaner 100 may be defined as the origin of the coordinate system. In the invention, an example of using a coordinate system having the location of the first UWB antenna 822 as the origin is mainly described.

The robot vacuum cleaner 100 has the location of the first UWB antenna 822 as the origin. In addition, the robot vacuum cleaner 100 defines an axis passing through the first UWB antenna 822 and the second UWB antenna 832 as an x-axis. Also, the robot vacuum cleaner 100 defines a plane formed by the first UWB antenna 822, the second UWB antenna 832, and the third UWB antenna 842 as an xy plane. The location of the fourth UWB antenna 810 of the first UWB device 110 is defined as one coordinate on the coordinate system. In addition, the robot vacuum cleaner 100 defines a z-axis perpendicular to the xy plane.

The AoA azimuth result value φ is defined as an angle formed by a path 1110 of the UWB signal of the fourth UWB antenna 810 projected on the xy plane with the x-axis, and is referred to as an azimuth angle. The AoA elevation result value θ is defined as an angle formed by the path 1110 of the UWB signal of the fourth UWB antenna 810 with the z-axis, and is referred to as elevation angle.

As described in FIG. 9, the robot vacuum cleaner 100 may calculate the first distance, the second distance, and the third distance, define the first circle, the second circle, and the third circle, and calculate the coordinates of the fourth UWB antenna 810 in the coordinate system of FIG. 11.

Referring again to FIG. 10, other parameters will be described.

AoA azimuth Figure of Merit (FOM) is an AoA azimuth figure of merit, and represents the figure of merit of expected accuracy of the AoA azimuth result value. The AoA azimuth FOM may be calculated based on a received Scrambled Timestamp Sequence (STS). The AoA azimuth FOM value may be expressed as an unsigned integer. The higher the AoA azimuth FOM value, the higher the reliability. When the AoA azimuth FOM value is zero, it indicates that the AoA azimuth FOM value is invalid.

The AoA elevation FOM is an AoA elevation figure of merit, and represents the figure of merit of expected accuracy of the AoA elevation result. The AoA elevation FOM may be calculated based on the received STS. The AoA elevation FOM value may be expressed as an unsigned integer. The higher the AoA elevation FOM value, the higher the reliability. When the AoA elevation FOM value is zero, it indicates that the AoA elevation FOM value is invalid. In order for the AoA azimuth FOM value and the AoA elevation FOM value to be meaningful, the AoA capability of a measuring device including details of an antenna array configuration needs to be known.

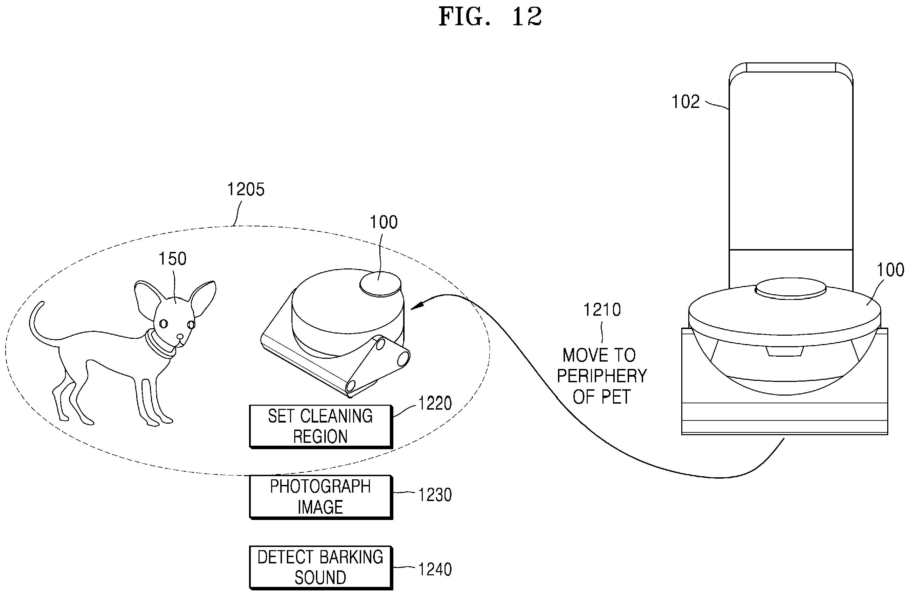

FIG. 12 is a diagram illustrating a monitoring operation on the pet 150 according to an embodiment of the invention.

The robot vacuum cleaner 100 performs the monitoring operation on the pet 150 under a certain condition during standby or charging in the charger 102. For example, when a user input requesting the monitoring operation is received from the external device 130, the robot vacuum cleaner 100 starts the monitoring operation. As an example, when barking sound of the pet 150 is detected, the robot vacuum cleaner 100 starts the monitoring operation. As an example, the robot vacuum cleaner 100 performs the monitoring operation on the pet 150 for a certain time period at a previously set time.

When the monitoring operation is started, the robot vacuum cleaner 100 performs the monitoring operation based on location information about the pet 150. When the monitoring operation is started, the robot vacuum cleaner 100 moves to a peripheral region 1205 of the pet 150 (1210). The peripheral region 1205 is a region within a certain distance from the pet 150. The robot vacuum cleaner 100 may track the pet 150 while maintaining a certain distance from the pet 150. When the pet 150 moves, the robot vacuum cleaner 100 may move along the pet 150 while maintaining the certain distance from the pet 150. Also, the robot vacuum cleaner 100 may track the pet 150 while adjusting a field of view (FOV) of a camera so that the pet 150 is present in the FOV of the camera.

According to an embodiment of the invention, the robot vacuum cleaner 100 sets a cleaning region based on the location information about the pet 150 (1220). The robot vacuum cleaner 100 sets a region where the pet 150 was located as the cleaning region. In order to keep the pet 150 in a comfortable state, the robot vacuum cleaner 100 may clean the region in which the pet 150 was located after the pet 150 leaves the corresponding region. Also, the robot vacuum cleaner 100 may store the region in which the pet 150 was located while tracking the pet 150, and set the region in which the pet 150 was located as the cleaning region. For example, when the pet 150 moves from the bedroom to the living room, the robot vacuum cleaner 100 may store a region where the pet 150 was located in the bedroom, and after the pet 150 moves to the living room, clean the region where the pet 150 was in the bedroom.

According to an embodiment of the invention, the robot vacuum cleaner 100 photographs an image while tracking the pet 150 (1230). The robot vacuum cleaner 100 moves to the peripheral region 1205 of the pet 150 based on the location information about the pet 150. Also, the robot vacuum cleaner 100 photographs the pet 150 by setting the FOV of the camera to face the pet 150. The robot vacuum cleaner 100 may photograph and record a still image or a moving image of the pet 150. According to an embodiment of the invention, the robot vacuum cleaner 100 photographs and records the still image or the moving image at a certain time interval. According to an embodiment of the invention, when a certain event related to the pet 150 occurs, the robot vacuum cleaner 100 photographs and records the still image or the moving image. The certain event may include, for example, a case where barking sound is detected, a case of eating food, a case of taking a nap, etc.

According to an embodiment of the invention, the robot vacuum cleaner 100 detects the barking sound of the pet 150 (1240) by using a microphone. When detecting the barking sound of the pet 150, the robot vacuum cleaner 100 may store an audio signal of a section corresponding to the barking sound. Also, the robot vacuum cleaner 100 may identify a time or a place at which the barking sound of the pet 150 is detected, and store the time or the place at which the barking sound is detected. The robot vacuum cleaner 100 may record a history of the time at which the barking sound of the pet 150 is detected. Also, the robot vacuum cleaner 100 may record location information in which the barking sound of the pet 150 is detected on a cleaning map.

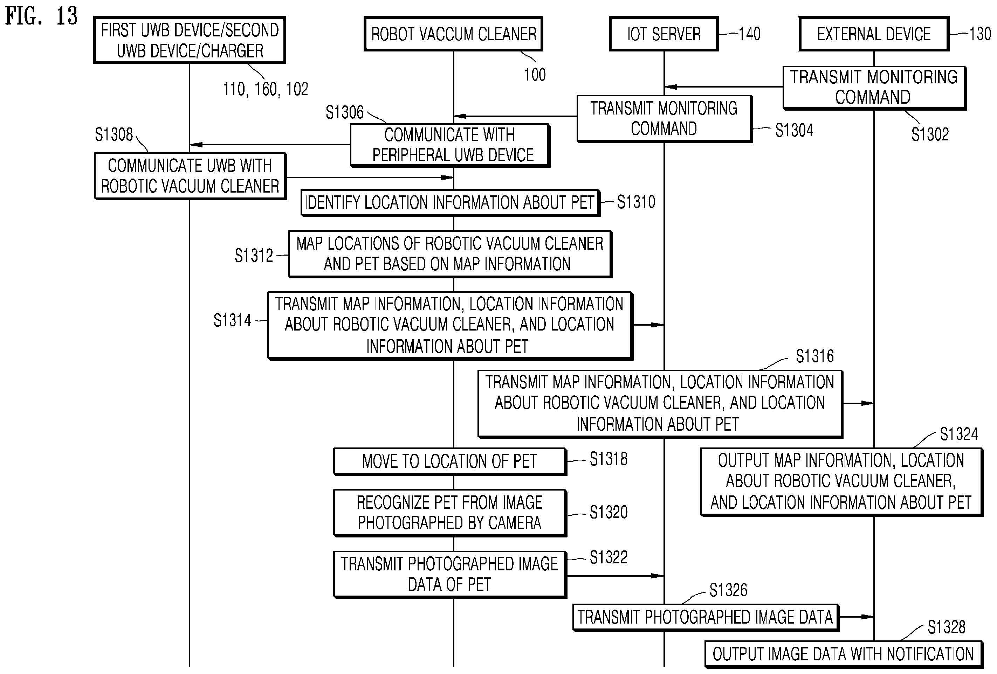

FIG. 13 is a flowchart illustrating an operation in which the robot vacuum cleaner 100 captures and monitors the pet 150 according to an embodiment of the invention.

According to an embodiment of the invention, the robot vacuum cleaner 100 photographs an image of the pet 150 and transmits the same to the external device 130. The robot vacuum cleaner 100 may perform an operation while communicating with the first UWB device 110, the second UWB device 160, the loT server 140, and the external device 130.

First, in operation S1302, the external device 130 transmits a monitoring command instructing a monitoring operation of the robot vacuum cleaner 100 to the loT server 140. The external device 130 may receive a user input instructing the monitoring operation of the robot vacuum cleaner 100 through a certain application. The external device 130 is a device registered in the same account of the loT server 140 with the robot vacuum cleaner 100. The external device 130 may receive a selection input for selecting the robot vacuum cleaner 100 and the user command instructing the monitoring operation together.

In operation S1304, the loT server 140 transmits the monitoring command received from the external device 130 to the robot vacuum cleaner 100. The loT server 140 transmits the monitoring command to the robot vacuum cleaner 100 registered in the same account as that of the external device 130. The loT server 140 may identify the robot vacuum cleaner 100 selected from the external device 130 and transmit the monitoring command to the identified robot vacuum cleaner 100.

Next, in operation S1306, when receiving the monitoring command, the robot vacuum cleaner 100 communicates with a peripheral UWB device. The peripheral UWB device outputs a UWB signal to the robot vacuum cleaner 100 or transmits information obtained using the detected UWB signal. The peripheral UWB device includes at least one of the first UWB device 110, the second UWB device 160, or the charger 102 described above.

The peripheral UWB device outputs a UWB signal to the robot vacuum cleaner 100 in operation S1308. According to an embodiment of the invention, the robot vacuum cleaner 100 receives the UWB signal from the first UWB device 110. According to an embodiment of the invention, the robot vacuum cleaner 100 receives information about a region in which the pet 150 is located from the second UWB device 160. According to an embodiment of the invention, the robot vacuum cleaner 100 receives the location information about the pet 150 from the charger 102.

Next, in operation S1310, the robot vacuum cleaner 100 identifies the location information about the pet 150 based on the UWB signal or location information received from the peripheral UWB device.

Next, in operation S1312, the robot vacuum cleaner 100 maps the locations of the robot vacuum cleaner 100 and the pet 150 based on map information. The robot vacuum cleaner 100 identifies the location of the robot vacuum cleaner 100 from the map information used during a cleaning process. Also, the robot vacuum cleaner 100 identifies the location of the pet 150 on the map information. According to an embodiment of the invention, the robot vacuum cleaner 100 defines the location information about the pet 150 in a coordinate system with respect to the robot vacuum cleaner 100. Also, the robot vacuum cleaner 100 identifies the location of the pet 150 on the map with respect to the location of the robot vacuum cleaner 100 on the map.

Next, in operation S1314, the robot vacuum cleaner 100 transmits the map information, the location information about the robot vacuum cleaner 100 on the map, and the location information about the pet 150 on the map to the loT server 140. In operation S1316, the loT server 140 transmits the map information, the location information about the robot vacuum cleaner 100 on the map, and the location information about the pet 150 on the map to the external device 130.

Next, in operation S1324, the external device 130 outputs the map information, the location information about the robot vacuum cleaner 100 on the map, and the location information about the pet 150 on the map. A certain application of the external device 130 may display the map information, the location information about the robot vacuum cleaner 100 on the map, and the location information about the pet 150 on the map.

Meanwhile, the robot vacuum cleaner 100 moves to the location of the pet 150 in operation S1318. The robot vacuum cleaner 100 may move to the periphery of the pet 150 while maintaining a certain distance from the pet 150.

The robot vacuum cleaner 100 recognizes the pet 150 from the image photographed by the camera in operation S1320. The robot vacuum cleaner 100 may recognize the pet 150 from the photographed image by using a certain object recognition algorithm or a machine learning model.

According to an embodiment of the invention, the robot vacuum cleaner 100 may store object information about the previously stored pet 150. The object information may be stored in the form of image data or feature point data. The robot vacuum cleaner 100 may recognize the pet 150 corresponding to the object information about the previously stored pet 150 from the photographed image. Even when the robot vacuum cleaner 100 recognizes animal from the photographed image, when the animal is not the previously stored pet 150, the robot vacuum cleaner 100 may determine that the pet 150 is not recognized.

According to an embodiment of the invention, when two or more pets 150 are at home, the robot vacuum cleaner 100 may store object information of each of the two or more pets 150. The robot vacuum cleaner 100 may identify and recognize the pet 150 from the photographed image by using the object information of each of the two or more pets 150.

The robot vacuum cleaner 100 transmits photographed image data of the pet 150 to the loT server 140 in operation S1322. The loT server 140 transmits the received photographed image data to the external device 130 in operation S1326.

The external device 130 outputs the received photographed image data in operation S1328. The external device 130 may output the photographed image data together with the previously output map information or may output the photographed image data in another graphical user interface (GUI) view. Also, the external device 130 may output the photographed image data together with a certain notification. For example, the external device 130 may notify that the photographed image data has been received with a pop-up notification, and display the photographed image data when a user selects the pop-up notification.

According to an embodiment of the invention, when a monitoring command is received, the robot vacuum cleaner 100 may transmit real-time photographed image data photographed by the camera to the loT server 140 even when the pet 150 has not yet been recognized. The loT server 140 transmits the real-time photographed image data received from the robot vacuum cleaner 100 to the external device 130. The external device 130 may receive and display the real-time photographed image data after the monitoring command until there is a separate end command.

According to an embodiment of the invention, the loT server 140 or the external device 130 identifies a space in which the pet 150 frequently stays based on the location information about the pet 150. For example, the loT server 140 or the external device 130 may obtain information that the pet 150 spends a time equal to or greater than 50% in the living room based on the location information about the pet 150. The loT server 140 or the external device 130 may select and recommend a necessary service using spatial information where the pet 150 frequently stays. For example, when the pet 150 frequently stays in the living room, the loT server 140 or the external device 130 recommends a service that may be provided in the living room. The loT server 140 or the external device 130 may identify an loT device disposed in a space of interest where the pet 150 frequently stays, select and recommend a service that may be provided by the loT device in the space of interest. For example, when the pet 150 frequently stays in the living room, the loT server 140 or the external device 130 may output a specific program using a TV in the living room, operate an air purifier, or output music through a speaker in the living room.

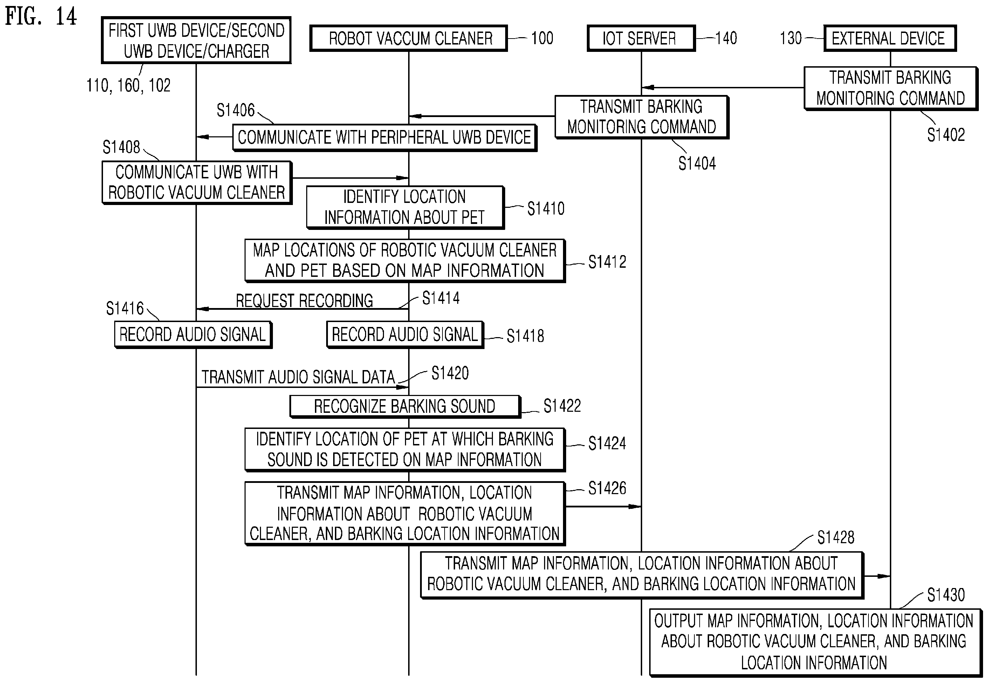

FIG. 14 is a flowchart illustrating an operation in which the robot vacuum cleaner 100 monitors barking sound of the pet 150 according to an embodiment of the invention.

According to an embodiment of the invention, the robot vacuum cleaner 100 recognizes the barking sound of the pet 150, and transmits a result of monitoring the barking sound to the external device 130. The robot vacuum cleaner 100 may perform an operation while communicating with the first UWB device 110, the second UWB device 160, the loT server 140, and the external device 130.

First, in operation S1402, the external device 130 transmits a barking monitoring command of the robot vacuum cleaner 100 instructing a barking monitoring operation to the loT server 140. The external device 130 may receive a user input instructing a monitoring operation on the robot vacuum cleaner 100 through a certain application. The external device 130 is a device registered in the same account of the loT server 140 with the robot vacuum cleaner 100. The external device 130 may receive a selection input for selecting the robot vacuum cleaner 100 and the user command instructing the barking monitoring operation together.

In operation S1404, the loT server 140 transmits the monitoring command received from the external device 130 to the robot vacuum cleaner 100. The loT server 140 transmits the barking monitoring command to the robot vacuum cleaner 100 registered in the same account as that of the external device 130. The loT server 140 may identify the robot vacuum cleaner 100 selected from the external device 130 and transmit the barking monitoring command to the identified robot vacuum cleaner 100.

Next, the robot vacuum cleaner 100 communicates with a peripheral UWB device in operation S1406, and the peripheral UWB device communicates with the robot vacuum cleaner 100 in operation S1408. Next, in operation S1410, the robot vacuum cleaner 100 identifies location information about the pet 150. Next, in operation S1412, the robot vacuum cleaner 100 identifies locations of the robot vacuum cleaner 100 and the pet 150 on the map. Operations S1406, S1408, S1410, and S1412 are similar to operations S1306, S1308, S1310, and S1312 described above with reference to FIG. 13, and thus detailed descriptions thereof are omitted.

Next, in operation S1414, the robot vacuum cleaner 100 requests for recording from the peripheral UWB device. The robot vacuum cleaner 100 may request recording from at least one of the first UWB device 110, the second UWB device 160, or the charger 102. The robot vacuum cleaner 100 stores or obtains device information including a microphone among the first UWB device 110, the second UWB device 160, or the charger 102. The robot vacuum cleaner 100 may request recording from a device including the microphone among the first UWB device 110, the second UWB device 160, or the charger 102.

Next, in operation S1416, a device that has received a recording request among peripheral UWB devices records an audio signal. For example, the peripheral UWB device may record the audio signal in a certain time period. As an example, the peripheral UWB device may transmit the audio signal to the robot vacuum cleaner 100 in real time. The peripheral UWB device transmits audio signal data recorded in operation S1420 to the robot vacuum cleaner 100.

The robot vacuum cleaner 100 records the audio signal by using the microphone in operation S1418. According to an embodiment of the invention, the robot vacuum cleaner 100 may move to the location of the pet 150 and record the audio signal.

Next, in operation S1422, the robot vacuum cleaner 100 detects barking sound from the audio signal data. The robot vacuum cleaner 100 may detect the barking sound from the audio signal data recorded by the robot vacuum cleaner 100. In addition, when receiving the audio signal data recorded from the peripheral UWB device, the robot vacuum cleaner 100 detects the barking sound from the received audio signal data. The robot vacuum cleaner 100 detects the barking sound using a certain sound recognition algorithm or a machine learning model.

Next, in operation S1424, the robot vacuum cleaner 100 identifies the location of the pet 150 at which the barking sound is detected on map information.

When the robot vacuum cleaner 100 recognizes the barking sound, the robot vacuum cleaner 100 identifies a time point when the barking sound is recognized. Also, the robot vacuum cleaner 100 identifies location information about the pet 150 at the time point when the barking sound is recognized. The robot vacuum cleaner 100 identifies the location information at the time point when the barking sound is recognized on the map information, and identifies and records a location where the barking sound is recognized on the map information.

Next, in operation S1426, the robot vacuum cleaner 100 transmits the map information, the location information about the robot vacuum cleaner 100 on the map, and the barking location information on the map where the barking sound is recognized to the loT server 140.

In operation S1428, the loT server 140 transmits the map information, the location information about the robot vacuum cleaner 100 on the map, and the barking location information on the map where the barking sound is recognized to the external device 130.

In operation S1430, the external device 130 outputs the map information, the location information about the robot vacuum cleaner 100 on the map, and the barking location information on the map where the barking sound is recognized. The external device 130 displays the map information, the location information about the robot vacuum cleaner 100, and the barking location information through a certain application.

According to an embodiment of the invention, the robot vacuum cleaner 100 transmits audio signal data corresponding to the recognized barking sound to the loT server 140. The loT server 140 transmits the audio signal data corresponding to the barking sound to the external device 130. The external device 130 outputs audio signal data corresponding to the received barking sound.

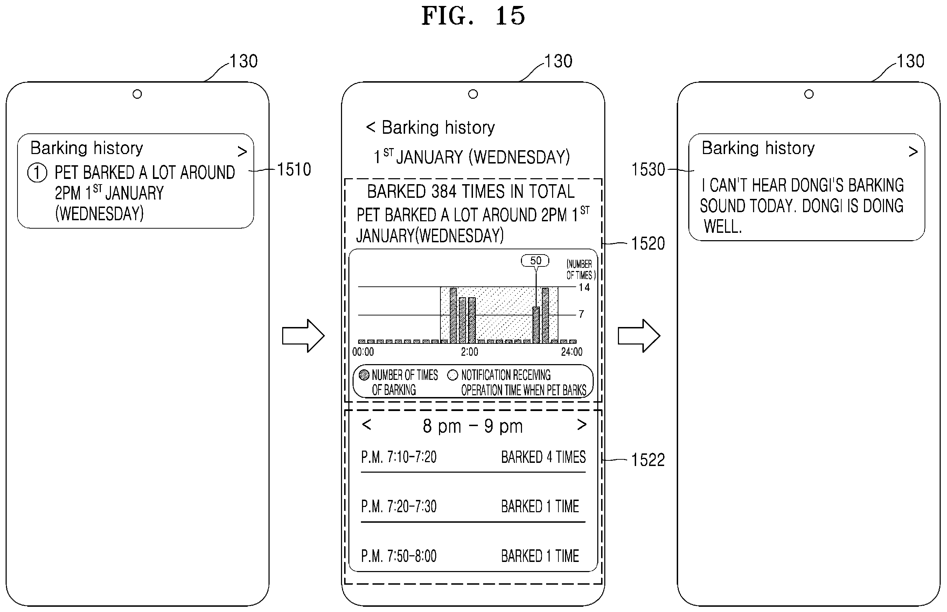

FIG. 15 is a diagram illustrating barking monitoring information according to an embodiment of the invention.

According to an embodiment of the invention, the robot vacuum cleaner 100, the loT server 140, or the external device 130 recognizes barking sound and generates the barking monitoring information. According to an embodiment of the invention, the barking monitoring information may include information about a time when the barking sound is recognized, the number of times the barking sound is detected for each time period, or location information in which the barking sound is recognized.

According to the invention, the barking monitoring information includes information about a time when the barking sound is frequently detected. The external device 130 may output a notification 1510 indicating the time when the barking sound is frequently detected.

According to an embodiment of the invention, the barking monitoring information includes the number of times the barking sound is detected for each time period. For example, the barking monitoring information includes a graph 1520 or a list 1522 indicating the number of times the barking sound is detected for each time period. The external device 130 displays the graph 1520 or the list 1522 through a certain application.

According to an embodiment of the invention, the barking monitoring information includes information indicating that the barking sound is not detected. When the barking sound is not detected for a certain time, the robot vacuum cleaner 100, the loT server 140, or the external device 130 generates information indicating that the barking sound is not detected. The external device 130 may output a notification 1530 indicating information indicating that the barking sound is not detected.

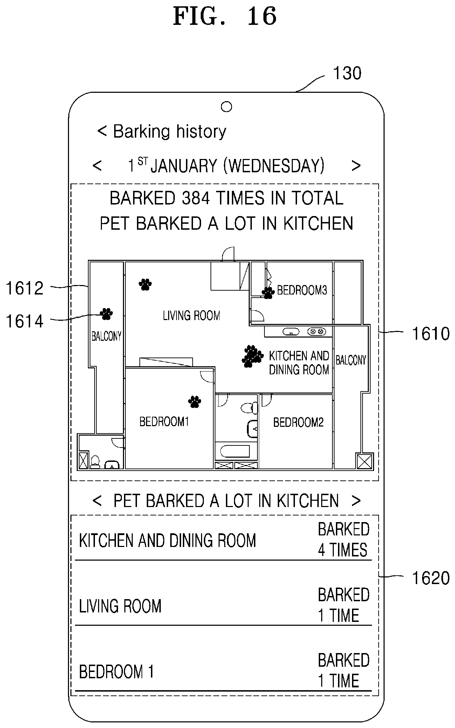

FIG. 16 is a diagram illustrating barking monitoring information according to an embodiment of the invention.

According to an embodiment of the invention, the robot vacuum cleaner 100, the loT server 140, or the external device 130 generates the barking monitoring information indicating a place where the barking sound is detected. According to an embodiment of the invention, the barking monitoring information includes barking map information 1610. The barking map information 1610 is information indicating a barking location 1614 at which the barking sound is detected on the map information 1612. Also, according to an embodiment of the invention, the barking monitoring information includes barking place list information 1612. The barking place list information 1620 is a list indicating the number of times the barking sound is detected for each location. The external device 130 displays at least one of the barking map information 1610 or the barking place list information 1620 through a certain application.

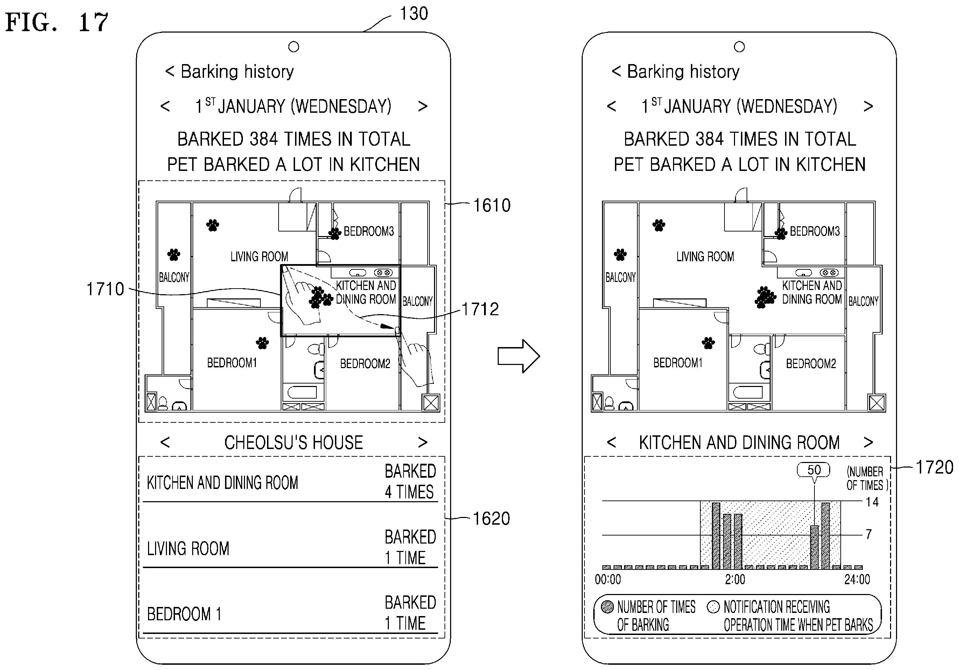

FIG. 17 is a diagram illustrating barking monitoring information according to an embodiment of the invention.

According to an embodiment of the invention, the external device 130 receives a user input 1712 selecting a specific region 1710 on the barking map information 1610. The barking place list information 1620 is also shown. According to an embodiment of the invention, the user input 1712 selecting the specific region 1710 may correspond to the user input 1712 in which a user drags the specific region. According to an embodiment of the invention, the user input selecting the specific region 1710 may correspond to a user input in which the user selects one of previously defined regions (e.g., the living room, the bedroom, the kitchen, etc.) For example, when a user input clicking the kitchen on the map information is received, the kitchen may be selected as the specific region 1710.

When the user input selecting the specific region 1710 is received, the external device 130 identifies barking sound information detected in the selected specific region 1710. Also, the external device 130 may indicate the number of times the barking sound is detected in the specific region 1710 for each time period. For example, the external device 130 generates and outputs a graph 1720 indicating the number of times the barking sound is detected in the specific region 1710 for each time period.

According to an embodiment of the invention, it is also possible for the loT server 140 or the robot vacuum cleaner 100 to generate and provide the barking monitoring information. In this case, the loT server 140 or the robot vacuum cleaner 100 collects location information at which the barking sound is detected. Also, the loT server 140 or the robot vacuum cleaner 100 transmits the location information at which the barking sound is detected to the external device 130. The external device 130 receives the location information at which the barking sound is detected from the loT server 140 or the robot vacuum cleaner 100 and outputs the same through an application.

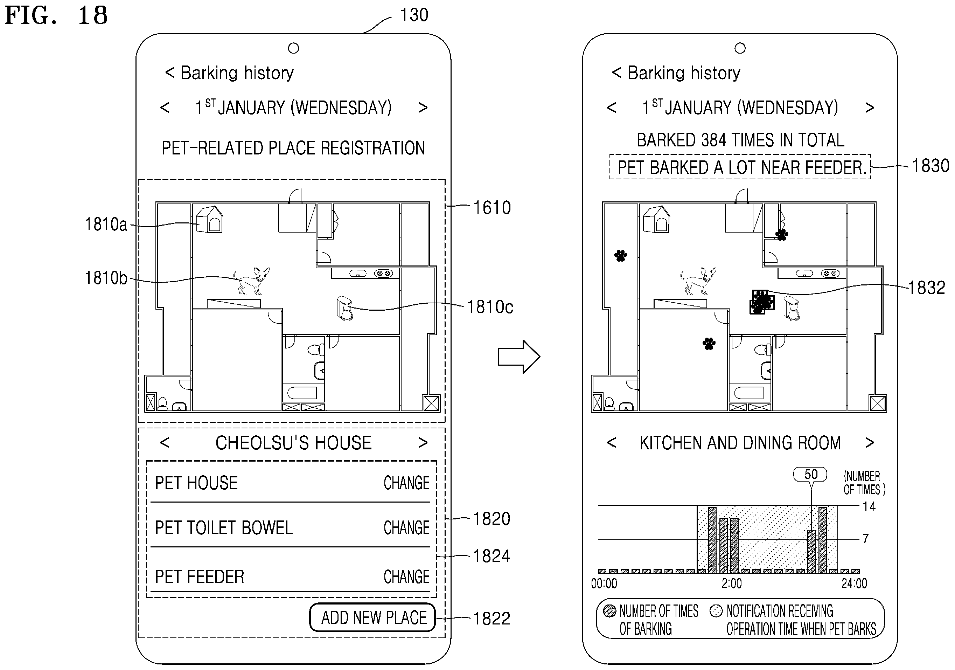

FIG. 18 is a diagram illustrating barking monitoring information according to an embodiment of the invention.

According to an embodiment of the invention, a barking location of the pet 150 may be provided in association with a pet-related place. The external device 130 may display pet-related locations 1810a, 1810b, and 1810c together with the barking location of the pet 150 on the map information 1610. Any suitable number of pet-related locations may be used.

The pet-related locations 1810a, 1810b, and 1810c may be predefined as locations related to the pet 150. The pet-related locations 1810a, 1810b, and 1810c may include at least one of, for example, the pet house location 1810a, the pet relief location 1810b, or the feeding location 1810c. The pet-related locations 1810a, 1810b, and 1810c may be displayed on the map information 1610. The pet relief location 1810b may be for example an area with absorbent pads covering a portion of the floor, litter box, or other designated area with a suitable floor covering, or waste containment box, or other location that the pet may relieve itself in the house.

The pet-related locations 1810a, 1810b, and 1810c may be input by a user. The external device 130 may provide a related location registration GUI 1820 for inputting the pet related locations 1810a, 1810b, and 1810c.

The related location registration GUI 1820 may provide an additional menu 1822 for registering a new related location. The external device 130 may receive information such as a type, location, and name of the new related location based on a user input. The external device 130 may transmit the input information about the new related location to the loT server 140. The loT server 140 may store and manage information about the new related location together with map information.

In addition, the related location registration GUI 1820 may provide a related location management menu 1824 that may provide and change information about an existing registered related location. The external device 130 may correct or delete information about the related location based on a user input that is input through the related location management menu 1824. The external device 130 may transmit the input information about the related location to the loT server 140. The loT server 140 may store and manage the input information about the related location together with the map information.

Also, when detecting barking sound of the pet 150, the external device 130 may provide information about a location 1832 at which the barking sound is detected in relation to the pet-related locations 1810a, 1810b, and 1810c. For example, when the pet 150 barks a lot near a feeder, the external device 130 may provide information 1830 indicating that the pet 150 barks a lot in the periphery of the feeding location 1810c.

According to an embodiment of the invention, it is also possible for the loT server 140 or the robot vacuum cleaner 100 to generate and provide the barking monitoring information. In this case, the loT server 140 or the robot vacuum cleaner 100 collects barking sound location information and pet related location information. In addition, the loT server 140 or the robot vacuum cleaner 100 transmits barking sound location information related to the pet-related locations 1810a, 1810b, and 1810c to the external device 130. The external device 130 receives the barking sound location information from the loT server 140 or the robot vacuum cleaner 100 and outputs the same through an application.

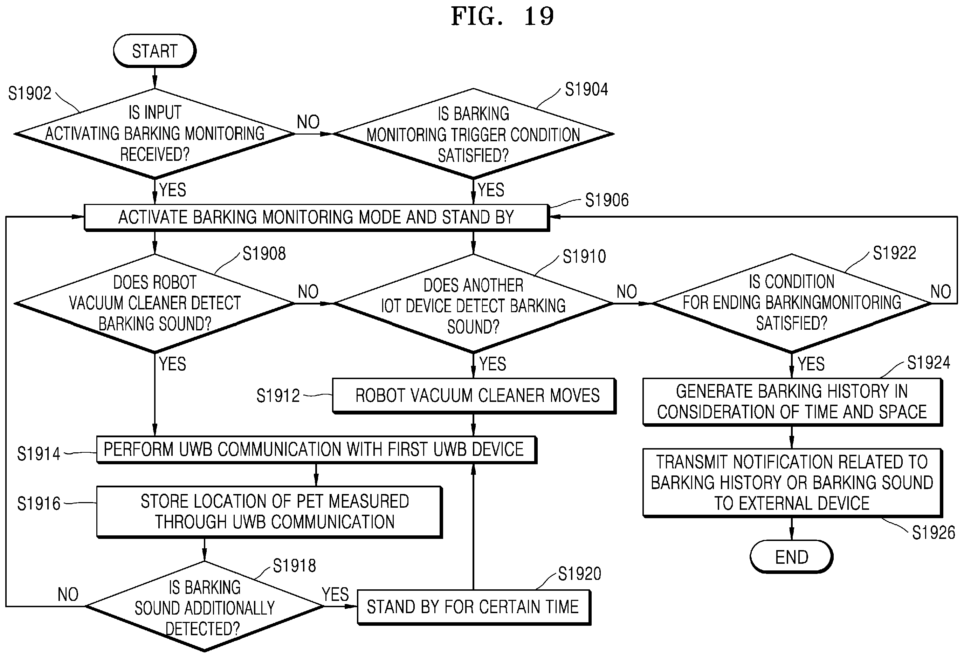

FIG. 19 is a flowchart illustrating an operation in which the robot vacuum cleaner 100 performs barking monitoring, according to an embodiment of the invention.

According to an embodiment of the invention, the robot vacuum cleaner 100 may detect barking sound and set a barking monitoring mode in which a location where the barking sound is detected is recorded. When the barking monitoring mode is activated, the robot vacuum cleaner 100 performs an operation of monitoring the barking sound.

First, in operation S1902, the robot vacuum cleaner 100 determines whether a user input activating the barking monitoring mode is received. The user input activating the barking monitoring mode may be input through a certain application executed in the external device 130. When the user input activating the barking monitoring mode is received from the external device 130, the robot vacuum cleaner 100 receives a user input activating the barking monitoring mode through the loT server 140.

When the user input activating the barking monitoring mode is received, the robot vacuum cleaner 100 activates the barking monitoring mode and operates in a barking monitoring standby state in operation S1906.

Also, in operation S1904, the robot vacuum cleaner 100 determines whether a barking monitoring trigger condition is satisfied. The barking monitoring trigger condition may include, for example, a case where the barking sound is detected or when the pet 150 moves to another region (e.g., moves from the living room to the bedroom) at home. When the barking monitoring trigger condition is satisfied, the robot vacuum cleaner 100 activates the barking monitoring mode and operates in a barking monitoring standby state in operation S1906.

Operations S1902 and S1904 are not limited to the order shown in FIG. 19. Operations S1902 and S1904 may be performed in the order opposite to that shown in FIG. 19 or may be performed in parallel.

The robot vacuum cleaner 100 activates the barking monitoring mode in operation S1906. Also, the robot vacuum cleaner 100 detects external sound by using a microphone, as shown by S1908.

Next, in operation S1914, when the robot vacuum cleaner 100 detects the barking sound of the pet 150, the robot vacuum cleaner 100 performs UWB communication with the first UWB device 110.

Also, in operation S1910, the robot vacuum cleaner 100 determines whether the barking sound is detected by another loT device. The other loT device is a device registered in the loT server 140 with the same account as that of the robot vacuum cleaner 100. The other loT device may correspond to, for example, the second UWB device 160. In addition, the other loT device may correspond to a device, for example, an Al speaker, a charger, a refrigerator, an air conditioner, a TV, etc. According to an embodiment of the invention, the other loT device corresponds to the first UWB device 110. The first UWB device 110 may include a microphone and detect the barking sound. The robot vacuum cleaner 100 may receive information indicating that the barking sound is detected from another loT device through the loT server 140.

When the barking sound is detected from the other loT device, in operation S1912, the robot vacuum cleaner 100 moves to the periphery of the other loT device.

Operations S1908 and S1910 are not limited to the order shown in FIG. Operations S1908 and S1910 may be performed in the order opposite to that shown in FIG. 19 or may be performed in parallel.

Next, in operation S1914, the robot vacuum cleaner 100 performs UWB communication with the first UWB device 110 in the periphery of the other loT device.

Next, in operation S1916, the robot vacuum cleaner 100 stores a location of the pet 150 measured through UWB communication. As described above, the robot vacuum cleaner 100 may identify a location of the first UWB device 110 using a UWB signal received from the first UWB device 110. The robot vacuum cleaner 100 may identify the location of the first UWB device 110 as the location of the pet 150.

Next, in operation S1918, the robot vacuum cleaner 100 continuously monitors the barking sound. When the barking sound is additionally detected, the robot vacuum cleaner 100 stands by for a certain time in operation S1920 and then performs again operation S1914 of performing UWB communication with the first UWB device 110. The certain time may be, for example, a time corresponding to several minutes or several seconds. For example, the robot vacuum cleaner 100 may stand by for 1 minute, 3 minutes, 5 minutes, or 10 minutes and then perform UWB communication with the first UWB device 110 again.

When the barking sound is not additionally detected in operation S1918, the robot vacuum cleaner 100 returns to operation S1906 of standing by in the barking monitoring mode.

When, in operation S1908, the robot vacuum cleaner 100 does not detect the barking sound and in operation S1910, the other loT device does not detect the barking sound, the robot vacuum cleaner 100 determines whether a condition for ending the barking monitoring mode is satisfied in operation S1922. The condition for ending the barking monitoring mode is a preset condition, and may include, for example, a case where the barking sound is not detected for more than a reference time, a case where an input requesting to maintain the barking monitoring mode is not received from the user, a case where the current time is not a time period set to operate in the barking monitoring mode, etc.

When the barking monitoring end condition is not satisfied, the robot vacuum cleaner 100 returns to operation S1906 of standing by in the barking monitoring mode while activating the barking monitoring mode.

When the barking monitoring end condition is satisfied, the robot vacuum cleaner 100 generates a barking history based on information collected in the barking monitoring mode in operation S1924. The robot vacuum cleaner 100 generates the barking history based on the time and space at which the barking sound is detected. For example, as shown in graph 1520 of FIG. 15, the robot vacuum cleaner 100 may generate the barking history with respect to the number of times the barking sound is detected over time. As an example, like the barking place list information 1620 of FIG. 16, the robot vacuum cleaner 100 may generate the barking history with respect to the number of times the barking sound is detected according to locations. As an example, the robot vacuum cleaner 100 may generate the barking history indicating the number of times the barking sound is detected in a specific space (the kitchen and the dining room) over time as shown in graph 1720 of FIG. 17.

Next, in operation S1926, the robot vacuum cleaner 100 transmits a notification related to the barking history or the barking sound to the external device 130. The robot vacuum cleaner 100 transmits the notification related to the barking history or the barking sound to the external device 130 through the loT server 140. The external device 130 outputs the notification related to the barking history or the barking sound through an application or a pop-up window.

According to an embodiment of the invention, it is also possible for the loT server 140, instead of the robot vacuum cleaner 100, to perform operations S1922, S1924, and S1926. In this case, the loT server 140 receives information indicating that the barking sound is detected, and information about the time at which the barking sound is detected and the location where the barking sound is detected, from the robot vacuum cleaner 100. The loT server 140 may perform operations S1922, S1924, and S1926 based on the received information.

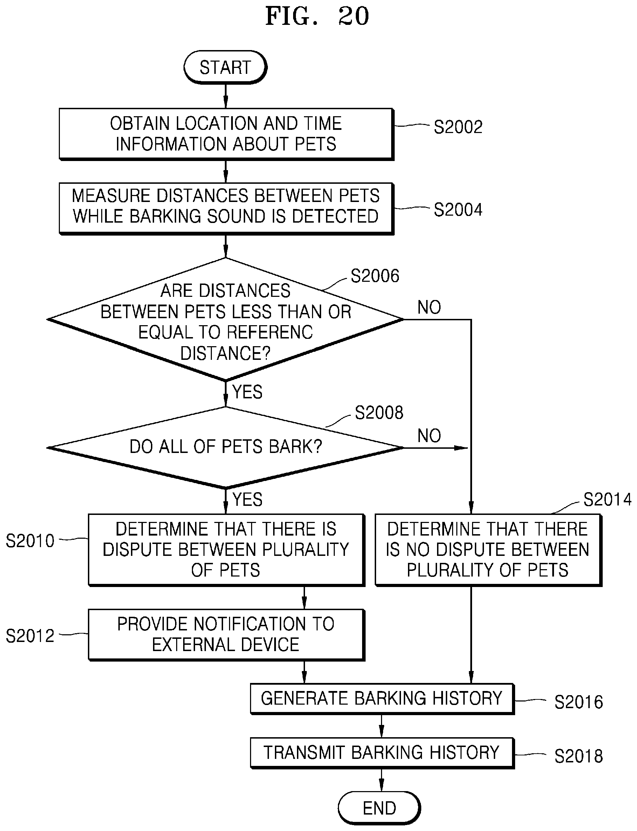

FIG. 20 is a flowchart illustrating a process in which the robot vacuum cleaner 100 detects a dispute between the pets 150 according to an embodiment of the invention.

According to an embodiment of the invention, when a plurality of pets 150 are at home, the robot vacuum cleaner 100 may determine whether there is the dispute between the plurality of pets 150. The robot vacuum cleaner 100 may determine whether there is the dispute between the plurality of pets 150 based on barking sound detection information and location information about the pets 150.

A dispute monitoring process of determining whether there is the dispute between the plurality of pets 150 may be performed by the robot vacuum cleaner 100 or the loT server 140. When the dispute monitoring process is performed by the loT server 140, the loT server 140 may receive location information, time information, and barking sound detection information about the pets 150 from the robot vacuum cleaner 100, and perform dispute monitoring processing based on the received information. In FIG. 20, the dispute monitoring process performed by the robot vacuum cleaner 100 is mainly described, but the embodiment of the invention is not limited thereto.

First, in operation S2002, the robot vacuum cleaner 100 obtains the location information about the pets 150. When obtaining the location information, the robot vacuum cleaner 100 also obtains the time information corresponding to the location information. As described above, the location information and time information about the pets 150 may be obtained based on a UWB signal received from the UWB device 110. The plurality of pets 150 may wear different UWB devices 110, respectively. The robot vacuum cleaner 100 detects a UWB signal from each UWB device 110, and identifies the location information about each UWB device 110. The robot vacuum cleaner 100 may identify the location information about each of the plurality of pets 150 at certain time intervals.

Next, in operation S2004, the robot vacuum cleaner 100 measures distances between the plurality of pets 150 at home while barking sound is detected. The robot vacuum cleaner 100 detects the barking sound. The robot vacuum cleaner 100 calculates the distances between the plurality of pets 150 while the barking sound is detected using the previously identified location information about each pet 150.

Next, in operation S2006, the robot vacuum cleaner 100 determines whether the distances between the pets 150 are less than or equal to a reference distance while the barking sound is detected. The reference distance is a preset distance, and may be, for example, 50 cm.

According to an embodiment of the invention, when determining whether the distances between the plurality of pets 150 are less than or equal to the reference distance, the robot vacuum cleaner 100 may determine whether the plurality of pets 150 are in the same space. For example, when the distances between the plurality of pets 150 are less than the reference distance, the robot vacuum cleaner 100 determines whether the plurality of pets 150 are in the same space (e.g., the living room, the bed room, the bathroom, etc.) When the plurality of pets 150 are in the same space and the distances are less than or equal to the reference distance, the robot vacuum cleaner 100 determines that the distances between the plurality of pets 150 are less than or equal to the reference distance in operation S2006. When the distances between the plurality of pets 150 are less than or equal to the reference distance, but the plurality of pets 150 are in different spaces, in operation S2006, the robot vacuum cleaner 100 determines that the distances between the plurality of pets 150 are not less than or equal to the reference distance. For example, even when the distances between the plurality of pets 150 are less than or equal to the reference distance with a wall interposed therebetween, when one pet 150 is in the living room and the other pet 150 is in the bedroom, the two pets 150 are in spaces different from each other. In this case, the robot vacuum cleaner 100 determines that the distance between the two pets 150 is less than or equal to the reference distance.

When it is determined in operation S2006 that the distances between the pets 150 exceed the reference distance, in operation S2014, the robot vacuum cleaner 100 determines that there is no dispute between the plurality of pets 150.

When it is determined in operation S2006 that the distances between the pets 150 are less than or equal to the reference distance, in operation S2008, the robot vacuum cleaner 100 determines whether all of the plurality of pets 150 bark.

When detecting the barking sound, the robot vacuum cleaner 100 may identify which pet relates to the barking sound among the plurality of pets 150. The robot vacuum cleaner 100 may identify which pet relates to the barking sound by using, for example, a sound recognition algorithm or a machine learning model. According to an embodiment of the invention, the pets 150 at home may be previously registered with the robot vacuum cleaner 100, the loT server 140, or the external device 130, and the barking sound of each pet 150 may be registered together. In this case, the robot vacuum cleaner 100, the loT server 140, or the external device 130 previously stores a sound pattern of the barking sound, and identify the barking sound between the plurality of pets 150 using the previously stored sound pattern.

The robot vacuum cleaner 100 identifies which pet relates to the barking sound among the plurality of pets 150, and determines whether the barking sound of each of the plurality of pets 150 is detected from the detected barking sound. When the barking sound of each of the plurality of pets 150 is detected, the robot vacuum cleaner 100 determines that all of the plurality of pets 150 bark. When the number of the plurality of pets 150 is three or more, the robot vacuum cleaner 100 determines whether the barking sound of each of the plurality of pets 150 of which distance is less than or equal to the reference distance among the plurality of pets 150 is detected.

When it is determined in operation S2008 that all of the plurality of pets bark, the robot vacuum cleaner 100 determines that there is the dispute between the plurality of pets 150 in operation S2010. In this case, the robot vacuum cleaner 100 generates information indicating that there is the dispute between the plurality of pets 150 and transmits the information to the external device 130, as shown by S2012. When the information indicating that there is the dispute between the plurality of pets 150 is input, the external device 130 outputs a notification that there is the dispute.

Also, the robot vacuum cleaner 100 may generate a barking history in operation S2016 based on a result of detecting the barking sound. A process of generating the barking history is similar to the process of generating the barking history in operation S1924 of FIG. 19 above, and thus a detailed description thereof is omitted.

Also, in operation S2018, the robot vacuum cleaner 100 transmits the barking history to the external device 130. An operation of transmitting the barking history to the external device 130 is similar to a process of transmitting the barking history in operation S1926 of FIG. 19 above, and thus a detailed description thereof is omitted.

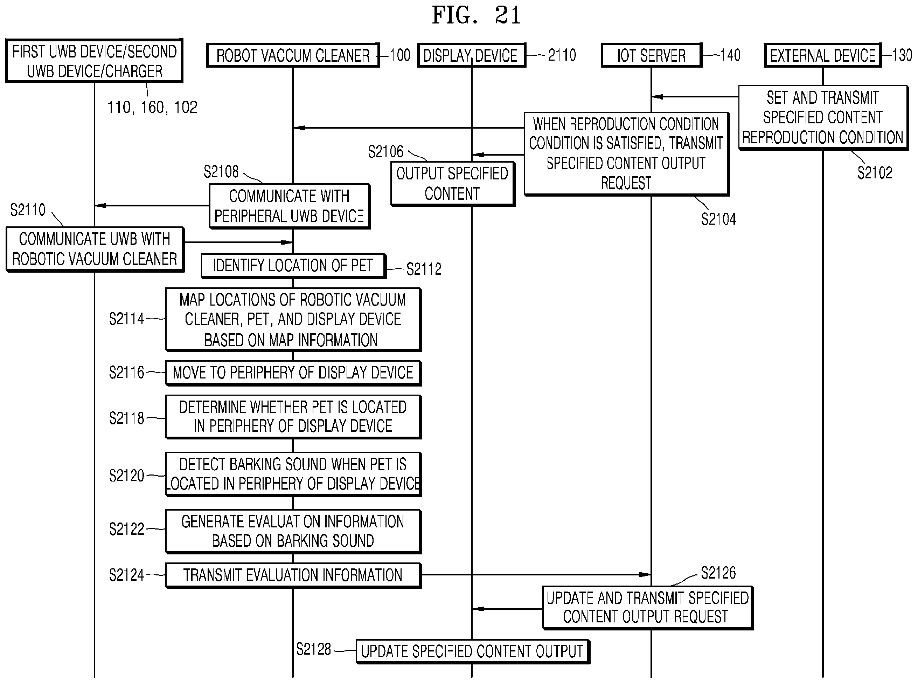

FIG. 21 is a flowchart illustrating a process of outputting specified content for the pet 150 according to an embodiment of the invention.

According to an embodiment of the invention, the robot vacuum cleaner 100 may monitor the pet 150 while the specified content for the pet 150 is output through a display device 2110. The specified content for the pet 150 is media content specified as content that the pet 150 will like. The specified content is output through the display device 2110 at home. The display device 2110 corresponds to, for example, a TV, a monitor, a tablet PC, a wall pad, etc. The robot vacuum cleaner 100 collects state information about the pet 150 in conjunction with an operation of outputting the specified content.

First, in operation S2102, the external device 130 receives a user input setting a reproduction condition for reproducing the specified content. The external device 130 may receive a reproduction condition of the specified content through a certain application. The reproduction condition of the specified content may correspond to, for example, a specific time period, a case where the barking sound of the pet 150 is detected more than a certain number of times, a case where an outing function is set, etc. The external device 130 transmits the reproduction condition of the specified content to the loT server 140.

In operation S2104, the loT server 140 determines whether the reproduction condition of the specified content is satisfied, and when the reproduction condition is satisfied, transmits a specified content output request to the robot vacuum cleaner 100 and the display device 2110. The loT server 140 may receive, from the robot vacuum cleaner 100, location information about the pet 150, barking sound detection information, information about whether the outing function is set at home, etc. The loT server 140 determines whether the reproduction condition of the specified content is satisfied based on the received information. When the output condition of the specified content is satisfied, the loT server 140 transmits a request for outputting the specified content to the display device 2110 and the robot vacuum cleaner 100. The specified content output request includes a specified content output command, specified content information, output conditions (e.g., volume, identification information about a display device to be output, channel, etc.), authentication information, etc.

When the display device 2110 receives the request for outputting the specified content, the display device 2110 outputs the specified content in operation S2106. The display device 2110 determines whether identification information about the display device included in the specified content output request is identical to identification information about the display device 2110. When the identification information is identical, the display device 2110 outputs the specified content based on information included in the specified content output request. For example, the display device 2110 may set a channel and set a volume based on information included in the specified content output request.

According to an embodiment of the invention, the display device 2110 may perform authentication using authentication information included in the specific content output request for security. The authentication information may include, for example, a security key set in advance, account information registered in the loT server 140, etc.

When receiving the specific content output request, the robot vacuum cleaner 100 communicates with a peripheral UWB device in operation S2108. The peripheral UWB device outputs a UWB signal to the robot vacuum cleaner 100 or transmits information obtained using the detected UWB signal. The peripheral UWB device includes at least one of the first UWB device 110, the second UWB device 160, or the charger 102 described above.

The peripheral UWB device outputs the UWB signal to the robot vacuum cleaner 100 in operation S2110. According to an embodiment of the invention, the robot vacuum cleaner 100 receives the UWB signal from the first UWB device 110. According to an embodiment of the invention, the robot vacuum cleaner 100 receives information about a region in which the pet 150 is located from the second UWB device 160. According to an embodiment of the invention, the robot vacuum cleaner 100 receives location information about the pet 150 from the charger 102.

Next, in operation S2112, the robot vacuum cleaner 100 identifies the location information about the pet 150 based on the UWB signal or the location information received from the peripheral UWB device.

Next, in operation S2114, the robot vacuum cleaner 100 maps the locations of the robot vacuum cleaner 100 and the pet 150 based on map information. The robot vacuum cleaner 100 identifies the location of the robot vacuum cleaner 100 from the map information used in a cleaning process. Also, the robot vacuum cleaner 100 identifies the location of the pet 150 on the map information. According to an embodiment of the invention, the robot vacuum cleaner 100 defines the location information about the pet 150 in a coordinate system with respect to the robot vacuum cleaner 100. Also, the robot vacuum cleaner 100 identifies the location of the pet 150 on the map with respect to the location of the robot vacuum cleaner 100 on the map.

According to an embodiment of the invention, the map information may previously store the location of the display device 2110.

According to an embodiment of the invention, the robot vacuum cleaner 100 identifies the location of the display device 2110 on the map information using the location information about the display device 2110 included in the specified content reproduction request. The specified content reproduction request may include location information about the display device 2110. The location information about the display device 2110 included in the specified content reproduction request may be defined with respect to the map information, defined with respect to the location of the charger 102, or defined with respect to the location of the second UWB device 160, or, defined with respect to the a certain device defined in the map information. The robot vacuum cleaner 100 may map the display location information included in the specified content reproduction request on the map information to identify the location of the display device 2110 on the map information.

Next, in operation S2116, the robot vacuum cleaner 100 moves to the periphery of the display device 2110. The robot vacuum cleaner 100 moves to the periphery of the display device 2110 using the location information about the display device 2110 identified on the map information.

Next, in operation S2118, the robot vacuum cleaner 100 determines whether the pet 150 is located in the periphery of the display device 2110. The robot vacuum cleaner 100 may determine whether the pet 150 is located in the periphery of the display device 2110 based on the UWB signal output from the UWB device 110 attached to the pet 150. Also, the robot vacuum cleaner 100 may photograph an image with a camera, recognize the pet 150 in the photographed image, and determine whether the pet 150 is located in the periphery of the display device 2110.

Next, in operation S2120, the robot vacuum cleaner 100 detects barking sound when the pet 150 is in the periphery of the display device 2110.

Next, in operation S2122, the robot vacuum cleaner 100 generates evaluation information about the specified content based on the barking sound of the pet 150. The evaluation information is information indicating whether the specified content is effective in relieving stress of the pet 150. According to an embodiment of the invention, when the barking sound is detected equal to or more than a certain number of times after the output of the specified content, the robot vacuum cleaner 100 may determine that the specified content is not effective in relieving the stress of the pet 150. In addition, the robot vacuum cleaner 100 may determine that the specified content is effective in relieving the stress of the pet 150 when the barking sound is detected equal to or less than a certain number of times after the output of the specified content, or when the barking sound is reduced less than the usual number of times.

Next, in operation S2124, the robot vacuum cleaner 100 transmits the evaluation information to the loT server 140.

Next, in operation S2126, the loT server 140 updates the specified content output request based on the evaluation information. For example, the loT server 140 may change the specified content or adjust the volume based on the evaluation information. The loT server 140 updates the specified content output request so that the specified content is changed or the volume is adjusted. The loT server 140 transmits an updated specific content output request to the display device 2110.

Next, in operation S2128, the display device 2110 outputs the specified content based on the updated specified content output request. For example, the display device 2110 may change the channel or adjust the volume based on the updated specific content output request.

According to an embodiment of the invention, when the output of the specified content is updated in operation S2128, the robot vacuum cleaner 100 repeats operations S2118, S2120, S2122, and S2124.

The external device 130 periodically determines whether the specified content reproduction condition is satisfied. When the specified content reproduction condition is not satisfied or a user input requesting to end the output of the specified content is received, the external device 130 transmits a request to end the output of the specified content to the display device 2110 and the robot vacuum cleaner 100. Based on the specified content output end request, the display device 2110 ends the output of the specified content, and the robot vacuum cleaner 100 ends the operation of monitoring the pet 150 while the specified content is reproduced.

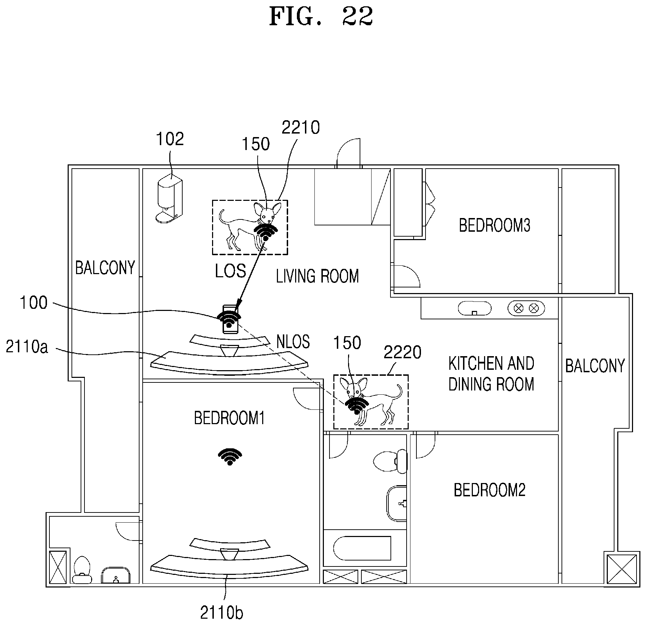

FIG. 22 is a diagram illustrating a process of determining whether the pet 150 is located in the periphery of display devices 2110a and 2110b while specified content is reproduced, according to an embodiment of the invention. Charger 102 is shown in a corner of the living room.

According to an embodiment of the invention, the robot vacuum cleaner 100 may determine whether the pet 150 is located in the periphery of the display devices 2110a and 2110b based on whether the pet 150 is a line of sight (LoS).

When moving to the periphery of the display device 2110a in operation S2116, the robot vacuum cleaner 100 moves to a location as close as possible to the display device 2110. When the plurality of display devices 2110a and 2110b are at home, the robot vacuum cleaner 100 moves to the display device 2110a specified in a specified content output request using display device identification information included in the specified content output request.

The robot vacuum cleaner 100 receives a UWB signal from the UWB device 110 attached to the pet 150. The robot vacuum cleaner 100 may determine whether the UWB device 110 attached to the pet 150 is the LoS using the received UWB signal. UWB service provides an "NLoS" value of a payload field of "two Way ranging measurement result" of "FiRA UWB UCI". The NLoS value has a value of 0x00 when the received UWB signal is the LoS, and has a value of 0x01 when the received UWB signal is not the LoS, that is, the NLoS. The robot vacuum cleaner 100 determines whether the pet 150 is the LoS using the NLoS value.

In order for the display device 2110 that reproduces the specified content to confirm whether the pet 150 views the display device 2110, the display device 2110 needs to include a camera or a UWB sensor. However, when the plurality of display devices 2110a and 2110b are at home, there is a problem in that each of the plurality of display devices 2110a and 2110b needs to include a camera or a UWB sensor. In addition, there is a problem in that the existing display devices 2110a and 2110b that do not include a camera or a UWB sensor may not implement the corresponding function. According to embodiments of the invention, the robot vacuum cleaner 100 capable of autonomous driving may perform UWB communication with the first UWB device 110 of the pet 150, and determine whether the pet 150 is located at a place where screens of the display devices 2110a and 2110b are visible, resulting in the effect of enabling monitoring of the pet 150 while outputting the specified content regardless of the configuration of the display devices 2110a and 2110b.

In FIG. 22, when the pet 150 is in a first location 2210, the robot vacuum cleaner 100 may determine that the pet 150 is the LoS. In this case, the robot vacuum cleaner 100 determines that the pet 150 is in the periphery of the display device 2110a. On the other hand, when the pet 150 is in a second location 2220, the UWB signal output from the UWB device 110 attached to the pet 150 passes through a wall and is transmitted to the robot vacuum cleaner 100. Due to this, the robot vacuum cleaner 100 obtains information indicating that the pet 150 corresponds to the NLoS from the UWB payload data. In this case, the robot vacuum cleaner 100 determines that the pet 150 is not in the periphery of the display device 2110a.

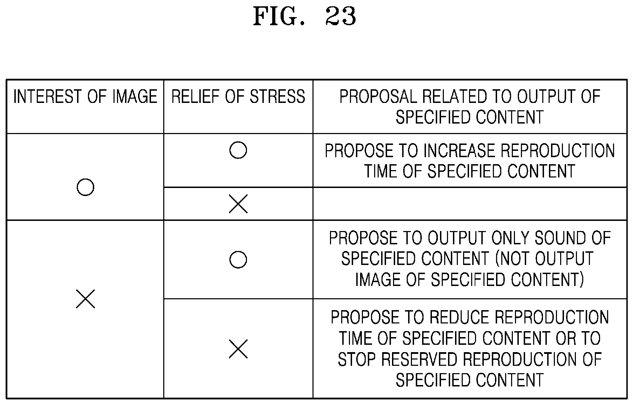

FIG. 23 is a diagram illustrating a process of generating evaluation information according to output of specified content, according to an embodiment of the invention.

According to an embodiment of the invention, the robot vacuum cleaner 100 may measure an interest of image and a relief of stress by monitoring location information and barking sound of the pet 150. Whether the interest of image is present and whether stress is relieved may correspond to the evaluation information with respect to output of specified content.

In addition, the robot vacuum cleaner 100 may generate and provide a proposal related to the output of the specified content based on whether the interest of image of the pet 150 is present and whether the stress of the pet 150 is relieved.

According to an embodiment of the invention, the loT server 140 may generate the evaluation information and the proposal. In an embodiment of the invention, the robot vacuum cleaner 100 generating the evaluation information and the proposal is mainly described, but the embodiment of the invention is not limited thereto.

The robot vacuum cleaner 100 determines how long the pet 150 has been located in the LoS while outputting the specified content. The robot vacuum cleaner 100 may determine whether the pet 150 is the LoS at certain time intervals. A value obtained by dividing the number of times determined that the pet 150 is in the LoS by the total number of measurements is referred to as X while outputting the specified content. In case of X<X1, the robot vacuum cleaner 100 determines that the pet 150 is not interested in the specified content, and thus determines that the interest of the image is not present (X). X1 may be set, for example, to about 0.3 to about 0.5. In case of X>=X1, the robot vacuum cleaner 100 determines that the interest of the image is present (O).

The robot vacuum cleaner 100 measures the number of times B1 the pet 150 barks per unit time while outputting the specified content. In addition, the robot vacuum cleaner 100 measures the number of times B2 the pet 150 barks per unit time while not outputting the specified content. In case of B2-B1>B, the robot vacuum cleaner 100 determines that the output of the specified content is effective in relieving the stress of the pet 150 (O). In case of B2-B1=<B, the robot vacuum cleaner 100 determines that the output of the specified content is not effective in relieving the stress of the pet 150 (X).

The robot vacuum cleaner 100 generates a proposal related to outputting the specified content based on a result of determining the interest of image and a result of determining the stress relief. When it is determined that the interest of image is present and the output of the specified content is effective in relieving the stress, the robot vacuum cleaner 100 proposes to increase a reproduction time of the specified content. When it is determined that the interest of image is present and the output of the specified content is not effective in relieving the stress, the robot vacuum cleaner 100 does not generate another proposal. When it is determined that the interest of image is not present and the output of the specified content is effective in relieving the stress, the robot vacuum cleaner 100 proposes to output only the sound of the specified content and not to output the image of the specified content. When it is determined that the interest of image is not present and the output of the specified content is not effective in relieving the stress, the robot vacuum cleaner 100 proposes to reduce the reproduction time of the specified content or to stop reserved reproduction of the specified content.

The robot vacuum cleaner 100 transmits the generated proposal to the loT server 140 and the external device 130. The external device 130 may output the proposal through a certain application. When the external device 130 receives a user input accepting the proposal, the external device 130 transmits a change request to the loT server 140 to change an output condition of the specified content according to the proposal. When the change request is received, the loT server 140 updates the specified content output request and transmits the same to the robot vacuum cleaner 100 and the display device 2110.

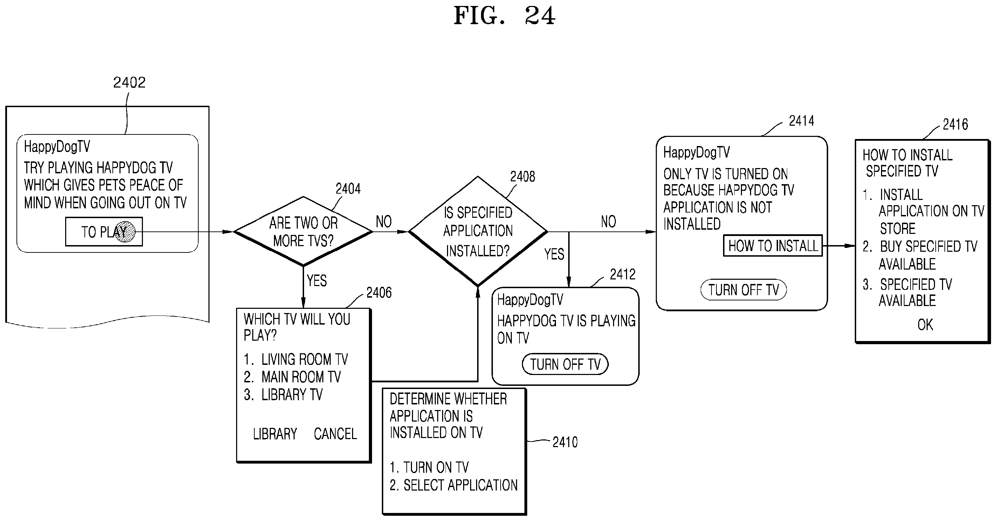

FIG. 24 is a diagram illustrating a process of installing a dedicated application for managing output of specified content on the display device 2110, according to an embodiment of the invention.

According to an embodiment of the invention, a pet care application that processes a process of outputting the specified content for the pet 150 on the display device 2110 may be installed. The external device 130 may determine whether the pet care application is installed on the display device 2110 and guide the process of installing the pet care application.

First, in operation 2402, a user input for requesting reproduction of the specified content is received through an application of the external device 130. The external device 130 determines whether two or more display devices are registered in operation 2404.

When the two or more display devices 2110 are registered, in operation 2406, the external device 130 outputs a menu for selecting the display device 2110. The external device 130 sets the display device 2110 selected by the user as the display device 2110 to output the specified content.

Next, in operation 2408, the external device 130 determines whether the pet care application is installed on the specified display device 2110, that is, one display device 2110 at home or the display device 2110 selected by the user. The external device 130 may provide a guide 2410 of how to determine whether the pet care application is installed on the display device 2110.

In operation 2412, when the pet care application is installed on the specified display device 2110, the external device 130 transmits a specified content reproduction request to the specified display device 2110 and outputs notification that the specified content is being reproduced through the external device 130. When the pet care application is not installed 2414, on the designated display device 2110, the external device 130 outputs a turn-on request to the specified display device 2110, and outputs notification that the pet care application is not installed on the display device 2110 and only the display device 2110 is turned on through the external device 130.

Also, in operation 2416, the external device 130 may output a guide 2416 of how to install the pet care application.

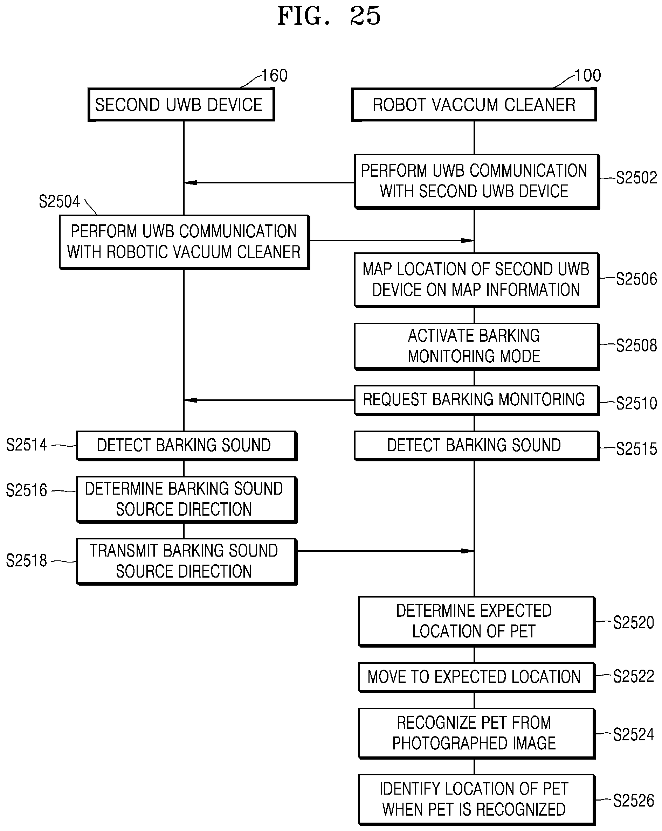

FIG. 25 is a diagram illustrating a method of identifying a location of the pet 150 by using the second UWB device 160 and the robot vacuum cleaner 100 according to an embodiment of the invention.

According to an embodiment of the invention, the robot vacuum cleaner 100 may receive expected location information about the pet 150 by using a microphone provided in the second UWB device 160. The robot vacuum cleaner 100 moves to a location corresponding to the expected location information, and recognizes the pet 150 by using a photographed image using a camera. When the pet 150 is recognized in the photographed image, the robot vacuum cleaner 100 identifies the location information about the pet 150 based on location information about the robot vacuum cleaner 100. According to the embodiment of the invention above, even when the pet 150 is not wearing the first UWB device 110, there is an effect of identifying the location of the pet 150.

According to an embodiment of the invention, the operation of identifying the location information about the pet 150 by using the second UWB device 160 may correspond to one auxiliary mode when the pet 150 is not equipped with the first UWB device 110. For example, the robot vacuum cleaner 100 determines whether the pet 150 is equipped with the first UWB device 110, and when the first UWB device 110 is equipped with the first UWB device 110, as described above, identifies the location information about the pet 150 by using the first UWB device 110. When the pet 150 is not equipped with the first UWB device 110, the robot vacuum cleaner 100 may identify the location information about the pet 150 by using the second UWB device 160.

According to an embodiment of the invention, the second UWB device 160 may correspond to an Al speaker. The second UWB device 160 includes a plurality of microphones and includes a plurality of UWB antennas. The second UWB device 160 is a device capable of performing UWB communication with the robot vacuum cleaner 100. The second UWB device 160 receives a UWB signal from the robot vacuum cleaner 100 using the plurality of UWB antennas. Also, the second UWB device 160 may identify the location of the robot vacuum cleaner 100 using the UWB signal received from the robot vacuum cleaner 100.

First, in operation S2502, the robot vacuum cleaner 100 performs UWB communication with the second UWB device 160. Also, in operation S2504, the second UWB device 160 performs UWB communication with the robot vacuum cleaner 100.

In operation S2506, the robot vacuum cleaner 100 maps the location of the second UWB device 160 on map information. The robot vacuum cleaner 100 may identify location information about the second UWB device 160 using the UWB signal received from the second UWB device 160. The robot vacuum cleaner 100 maps the identified location information about the second UWB device 160 to the map information.

Next, in operation S2508, the robot vacuum cleaner 100 activates a barking monitoring mode. A request for barking monitoring is made S2510. When the barking monitoring mode is activated, the robot vacuum cleaner 100 detects barking sound of the pet 150 by using the microphone of the robot vacuum cleaner 100 in operation S2515.

Also, in operation S2510, when the barking monitoring mode is activated, the robot vacuum cleaner 100 transmits a barking monitoring request to the second UWB device 160. When the second UWB device 160 receives the barking monitoring request, in operation S2514, the second UWB device 160 detects the barking sound of the pet 150 by using a plurality of microphones.

In operation S2516, the second UWB device 160 determines a barking sound source direction based on the detected barking sound. Also, in operation S2518, the second UWB device 160 transmits barking sound source direction information to the robot vacuum cleaner 100. The robot vacuum cleaner 100 determines expected location information about the pet 150 in operation S2520.

According to an embodiment of the invention, the second UWB device 160 determines the barking sound source direction based on the detected barking sound, and identifies the expected location information about the pet 150 using the barking sound source direction information. Also, the second UWB device 160 transmits the identified expected location information to the robot vacuum cleaner 100.

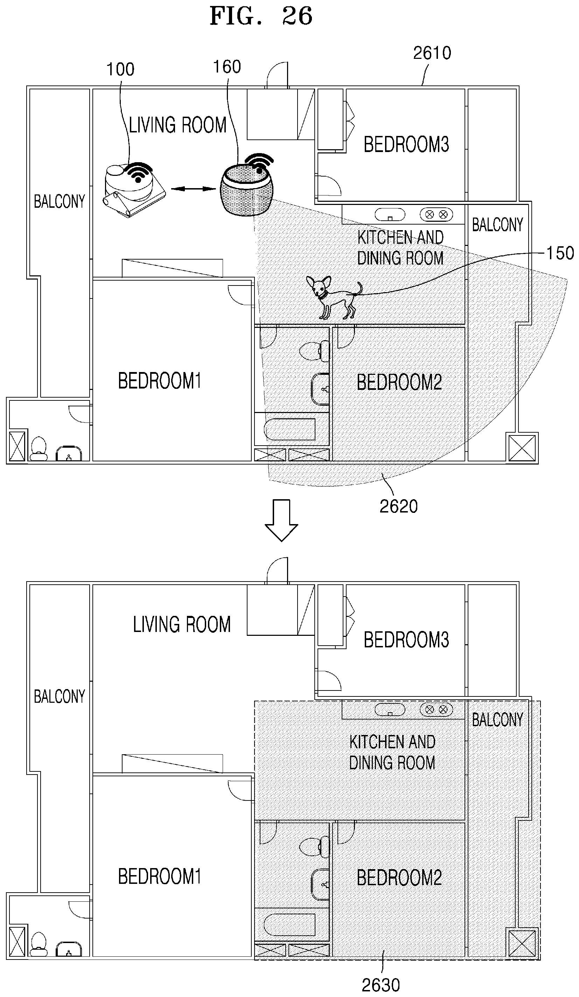

Operations S2516, S2518, and S2520 are described with reference to FIG. 26.

FIG. 26 is a diagram illustrating a process in which the second UWB device 160 identifies expected location information about the pet 150, according to an embodiment of the invention.

The second UWB device 160 identifies a sound source direction range 2620 based on detected barking sound. The second UWB device 160 may identify a direction of sound source corresponding to the barking sound based on the intensity of the barking sound detected by a plurality of microphones. The second UWB device 160 identifies the direction in which it is expected that the sound source is present based on the direction of sound source, and identifies the sound source direction range 2620 indicating a region corresponding to the direction.

According to an embodiment of the invention, the second UWB device 160 maps the sound source direction range 2620 to the map information 2610. The second UWB device 160 receives map information 2610 from the robot vacuum cleaner 100, and identifies a location of the second UWB device 160 on the map information 2610 based on a relative location with the robot vacuum cleaner 100. The second UWB device 160 maps the sound source direction range 2620 on the map information based on the location of the second UWB device 160 on the map information. The second UWB device 160 transmits sound source direction range information mapped to the map information to the robot vacuum cleaner 100. In this case, the second UWB device 160 transmits the sound source direction range information mapped to the map information to the robot vacuum cleaner 100.

According to an embodiment of the invention, the robot vacuum cleaner 100 receives information about the sound source direction range 2620 from the second UWB device 160. The sound source direction range 2620 may be information indicating the direction of the sound source with respect to the second UWB device 160. The robot vacuum cleaner 100 maps the sound source direction range 2620 on the map information 2610.

Next, the robot vacuum cleaner 100 identifies an expected location 2630 of the pet 150 based on the sound source direction range 2620 mapped to the map information. The predicted location 2630 may be defined as a certain range at home. The robot vacuum cleaner 100 may define a sub-region on the map information corresponding to the sound source direction range 2620. The sub-region is a region corresponding to, for example, a living room, a bedroom, a kitchen, a bathroom, a balcony, etc. The robot vacuum cleaner 100 identifies at least one sub-region corresponding to the sound source direction range 2620 as the expected location 2630 on the map information.

The next operation is described with reference to FIG. 25 again.

When the expected location information about the pet 150 is determined, the robot vacuum cleaner 100 moves to the expected location in operation S2522. When the robot vacuum cleaner 100 reaches the expected location of the pet 150, in operation S2524, the robot vacuum cleaner 100 performs photographing and recognizes the pet 150 from a photographed image.

The robot vacuum cleaner 100 performs photographing while changing the location and direction within the expected location. The robot vacuum cleaner 100 may determine whether the barking sound of the pet 150 increases or decreases while driving in a region corresponding to the expected location, and update the expected location of the pet 150 based on a change in the barking sound. Also, the robot vacuum cleaner 100 may move to the updated expected location and perform photographing again.

The robot vacuum cleaner 100 recognizes the pet 150 by the photographed image. The robot vacuum cleaner 100 may recognize the pet 150 from the photographed image using an object recognition algorithm or a machine learning model.

When the robot vacuum cleaner 100 recognizes the pet 150 from the photographed image, the robot vacuum cleaner 100 identifies the location of the pet 150 in operation S2526. The robot vacuum cleaner 100 may identify the location of the pet 150 based on a photographing location and a photographing direction of the photographed image in which the pet 150 is recognized. As an example, the robot vacuum cleaner 100 may move to a location as close as possible to the pet 150, and identify location information about the robot vacuum cleaner 100 at the closest location as the location information about the pet 150.

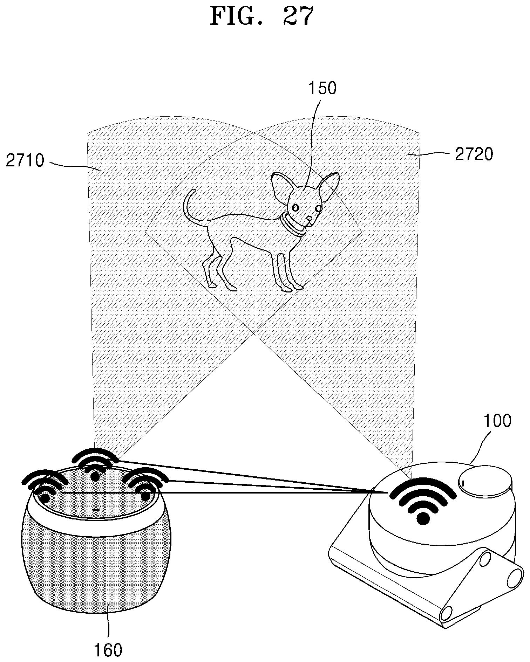

FIG. 27 is a diagram illustrating a process of estimating a sound source direction based on barking sound detected by the second UWB device 160 and barking sound detected by the robot vacuum cleaner 100 according to an embodiment of the invention.

According to an embodiment of the invention, the robot vacuum cleaner 100 may identify a first sound source direction range 2710 using the barking sound detected by the second UWB device 160, and identify a second sound source direction range 2720 using the barking sound detected by the robot vacuum cleaner 100. Also, the robot vacuum cleaner 100 may identify a sound source direction range based on the first sound source direction range 2710 and the second sound source direction range 2720.

When the second UWB device 160 and the robot vacuum cleaner 100 are in different spaces, one device may be inside a LoS and the other device may be outside the LoS in relation to the pet 150. In general, because sound may be recognized more accurately when a device is inside the LoS, the accuracy may be increased by estimating the sound source direction using the device inside the LoS with respect to the sound source. According to an embodiment of the invention, each of the second UWB device 160 and the robot vacuum cleaner 100 detects the barking sound, and based on the sound source direction range detected by two devices, identifies the sound source direction range, resulting in the effect of estimating the sound source direction more accurately.

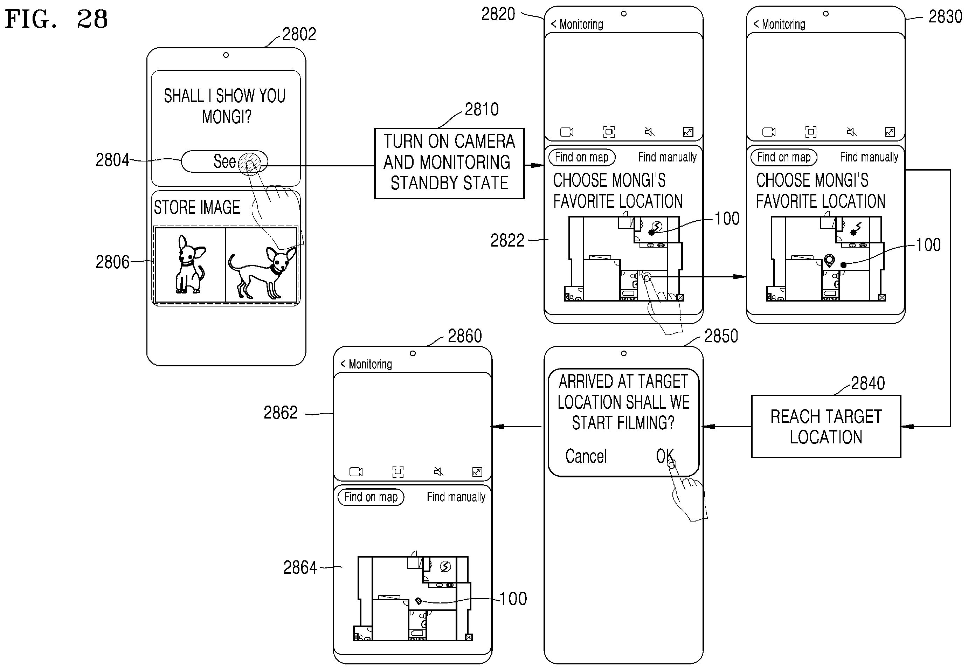

FIG. 28 is a diagram illustrating a process of starting a monitoring mode based on a user input according to an embodiment of the invention.

According to an embodiment of the invention, the external device 130 may receive the user input requesting initiation of the monitoring mode through an application, and obtain and provide monitoring information.

First, in operation 2802, the external device 130 receives the user input requesting monitoring of the pet 150. A user selects a certain button 2804 to request monitoring. Also, according to an embodiment of the invention, the external device 130 may provide a stored image 2806 of the pet 150 that is previously photographed and stored.

When the user input requesting monitoring of the pet 150 is received from the external device 130, the robot vacuum cleaner 100 turns on a camera in operation 2810 and is changed to a monitoring standby state.

Next, in operation 2820, the external device 130 receives an input for receiving information related to a monitoring location from the user. According to an embodiment of the invention, the external device 130 receives a user input for selecting a favorite place of the pet 150 through a GUI 2822. When the user input for selecting the favorite place of the pet 150 is received from the user, the external device 130 transmits information about a place selected by the user to the loT server 140. The loT server 140 transmits information about the place selected by the user to the robot vacuum cleaner 100. The robot vacuum cleaner 100 sets the place selected by the user as a target location and moves to the target location.

Next, in operation 2830, the external device 130 shows the location of the robot vacuum cleaner 100 on map information in real time.

In operation 2840, when the robot vacuum cleaner 100 reaches the target location, the robot vacuum cleaner 100 transmits information indicating that the target location has been reached to the loT server 140. The loT server 140 transmits the information indicating that the robot vacuum cleaner 100 has reached the target location to the external device 130.

Next, in operation 2850, the external device 130 outputs the information that the robot vacuum cleaner 100 has reached the target location through the GUI 2822. In addition, the external device 130 receives a user input requesting photographing.

Next, in operation 2860, the external device 130 provides a real-time photographed image 2862 photographed by the robot vacuum cleaner 100 and real-time location information 2864 of the robot vacuum cleaner 100. The robot vacuum cleaner 100 transmits the real-time photographed image 2862 and the real-time location information 2864 of the robot vacuum cleaner 100 to the loT server 140. The loT server 140 transmits the received real-time photographed image 2862 and the real-time location information 2864 of the robot vacuum cleaner 100 to the external device 130. The external device 130 displays the real-time photographed image 2862 and the real-time location information 2864 received from the loT server 140.

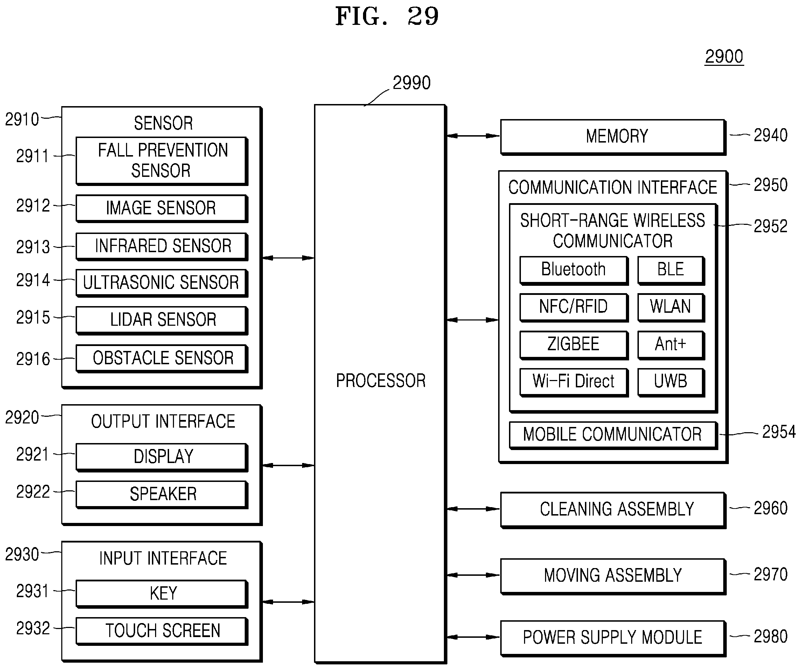

FIG. 29 is a block diagram of a structure of a robot vacuum cleaner 2900, according to an embodiment of the invention.

The robot vacuum cleaner 2900 according to an embodiment of the invention includes a sensor 2910, an output interface 2920, an input interface 2930, a memory 2940, a communication interface 2950, a cleaning assembly 2960, and a moving assembly 2970, a battery 2980, and a processor 2990. The robot vacuum cleaner 2900 may be configured in various combinations of the components shown in FIG. 29, and the components shown in FIG. 29 are not all indispensable components.

The robot vacuum cleaner 2900 of FIG. 29 corresponds to the robot vacuum cleaner 100 described above. The memory 2940 corresponds to the memory 216 described with reference to FIG. 2. The communication interface 2950 corresponds to the UWB communication module 212 described in FIG. 2 and the communication module 420 described in FIG. 4. The processor 2990 corresponds to the processor 210 described with reference to FIG. 2. The moving assembly 2970 corresponds to the moving assembly 214 described with reference to FIG. 2.

The sensor 2910 may include various types of sensors, and may include, for example, at least one of a fall prevention sensor 2911, an image sensor 2912, an infrared sensor 2913, an ultrasonic sensor 2914, a lidar sensor, or other 3-D laser sensor, 2915, an obstacle sensor 2916, or a mileage detection sensor (not shown) or a combination thereof. The mileage detection sensor may include a rotation detection sensor that calculates the number of rotations of a wheel. For example, the rotation detection sensor may have an encoder installed to detect the number of rotations of a motor. A plurality of image sensors 2912 may be disposed in the robot vacuum cleaner 2900 according to an embodiment of the invention. Functions of each sensor may be intuitively inferred by one of ordinary skill in the art from the name, detailed descriptions thereof will be omitted.

The output interface 2920 may include at least one of a display 2921 or a speaker 2922, or a combination thereof. The output interface 2920 outputs various notifications, messages, and information generated by the processor 2990.

The input interface 2930 may include a key 2931, a touch screen 2932, etc. The input interface 2930 receives a user input and transmits the same to the processor 2990.

The memory 2940 stores various types of information, data, a set of instructions, a program, etc. required for operations of the robot vacuum cleaner 2900. The memory 2940 may be configured in at least one of a volatile memory or a nonvolatile memory, or a combination thereof. The memory 2940 may include at least one type of storage medium among a flash memory type, a hard disk type, a multimedia card micro type, a card type memory (for example, a secure digital (SD) or an extreme digital (XD) memory), random access memory (RAM), static RAM (SRAM), read-only memory (ROM), electrically erasable programmable ROM (EEPROM), programmable ROM (PROM), a magnetic memory, a magnetic disk, and an optical disk. Also, the robot vacuum cleaner 2900 may operate a web storage or cloud server performing a storing function on the Internet.

The communication interface 2950 may include at least one or a combination of a short-range wireless communicator 2952 or a mobile communicator 2954. The communication interface 2950 may include at least one antenna for communicating with another device wirelessly.

The short-range wireless communicator 2952 may include a Bluetooth communicator, a Bluetooth low energy (BLE) communicator, a near field communicator, a wireless local region network (WLAN) (Wi-Fi) communicator, a Zigbee communicator, an infrared data association (IrDA) communicator, a Wi-Fi direct (WFD) communicator, an ultra-wideband (UWB) communicator, and an Ant+ communicator, but is not limited thereto.

The mobile communicator 2954 may transmit or receive a wireless signal to or from at least one of a base station, an external terminal, or a server, on a mobile communication network. Here, the wireless signal may include various types of data according to exchange of a voice call signal, an image call signal, or a text/multimedia message.

The cleaning assembly 2960 may include a main brush assembly installed on a lower portion of a main body to sweep or scatter dust on the floor and to suck the swept or scattered dust and a side brush assembly installed on the lower part of the main body so as to protrude to the outside and sweeping dust from a region different from a region cleaned by the main brush assembly and delivering the same to the main brush assembly. Also, the cleaning assembly 2960 may include a vacuum cleaning module performing vacuum suction or a damp cloth cleaning module cleaning with a damp cloth.

The moving assembly 2970 moves the main body of the robot vacuum cleaner 2900. The moving assembly 2970 may include a pair of wheels that move forward, backward, and rotate the robot vacuum cleaner 2900, a wheel motor that applies a moving force to each wheel, and a caster wheel installed in front of the main body and of which angle is changed by rotating according to a state of a floor surface on which the robot vacuum cleaner 2900 moves, etc. The moving assembly 2970 moves the robot vacuum cleaner 2900 according to the control of the processor 2990. The processor 2990 determines a driving path and controls the moving assembly 2970 to move the robot vacuum cleaner 2900 along the determined driving path.

The power supply module 2980 supplies power to the robot vacuum cleaner 2900. The power supply module 2980 includes a battery, a power driving circuit, a converter, a transformer circuit, etc. The power supply module 2980 connects to a charging station to charge the battery, and supplies the power charged in the battery to the components of the robot vacuum cleaner 2900.

The processor 2990 controls all operations of the robot vacuum cleaner 2900. The processor 2990 may control the components of the robot vacuum cleaner 2900 by executing a program stored in the memory 2940.

According to an embodiment of the invention, the processor 2990 may include a separate neural processing unit (NPU) performing an operation of a machine learning model. In addition, the processor 2990 may include a central processing unit (GPU), a graphics processing unit (GPU), etc.

The processor 2990 may perform operations such as operation mode control of the robot vacuum cleaner 2900, driving path determination and control, obstacle recognition, cleaning operation control, location recognition, communication with an external server, remaining battery monitoring, battery charging operation control, etc.

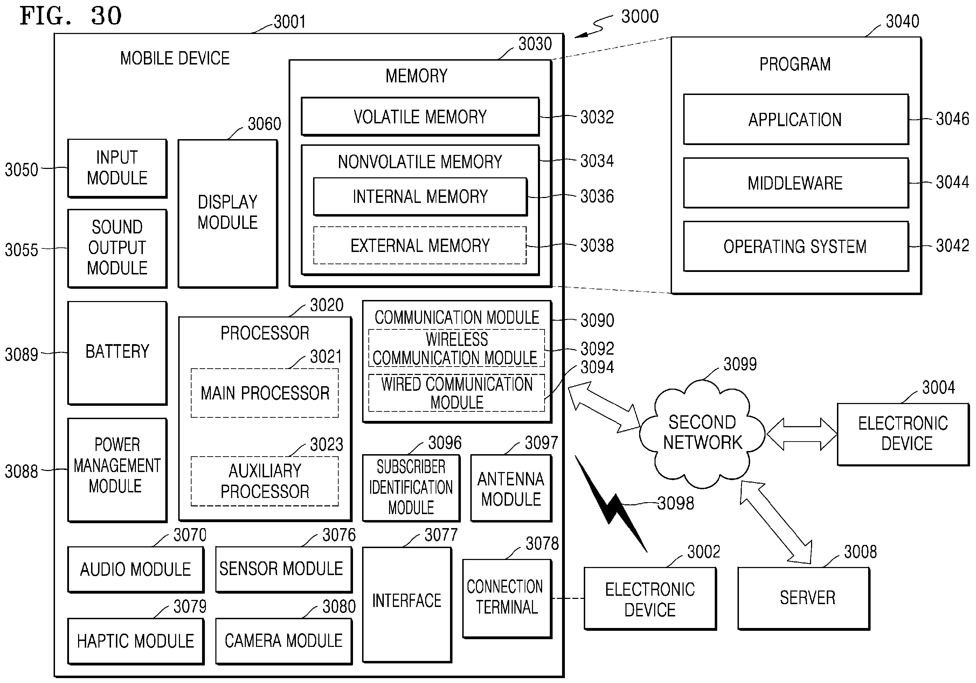

FIG. 30 is a block diagram of a mobile device 3001 in a network environment 3000, according to various embodiments of the invention.

The mobile device 3001 of FIG. 30 may correspond to the mobile device 130 described above. In addition, the loT server 140 and the Al server 740 described above may correspond to a server 3008, and the robot vacuum cleaner 100 may correspond to an electronic device 3002 or an electronic device 3004.

Referring to FIG. 30, in the network environment 3000, the mobile device 2201 may communicate with the electronic device 3002 via a first network 3098 (e.g., a short-range wireless communication network) or communicate with at least one of the electronic device 3004 or server 3008 via a second network 3099 (e.g., a long-range wireless communication network). According to an embodiment of the invention, the mobile device 3001 may communicate with the electronic device 3004 via the server 3008. According to an embodiment of the invention, the mobile device 3001 may include the processor 3020, the memory 3030, the input module 3050, the sound output module 3055, the display module 3060, the audio module 3070, a sensor module 3076, an interface 3077, a connection terminal 3078, the haptic module 3079, a camera module 3080, a power management module 3088, a battery 3089, the communication module 3090, a subscriber identification module 3096, or an antenna module 3097. According to some embodiments of the invention, at least one (e.g., the connection terminal 3078) of the components may be omitted or one or more other components may be added to the mobile device 3001. According to some embodiments of the invention, some (e.g., the sensor module 3076, the camera module 3080, or the antenna module 3097) of the components may be integrated into one component (e.g., the display module 3060).

The processor 3020 may, for example, control at least one component (e.g., a hardware or software component) of the mobile device 3001 connected to the processor 3020 by executing software (e.g., a program 3040), and may perform various data processes or operations. According to an embodiment of the invention, as at least a part of the data processes or operations, the processor 3020 may store, in a volatile memory 3032, a command or data received from another component (e.g., the sensor module 3076 or communication module 3090), process the command or data stored in the volatile memory 3032, and store result data in a nonvolatile memory 3034. Internal memory 3036 and external memory 3038 may also be part of nonvolatile memory 3034. According to an embodiment of the invention, the processor 3020 may include a main processor 3021 (e.g., a CPU or application processor) or an auxiliary processor 3023 (e.g., a GPU, NPU, image signal processor, sensor sub processor, or communication processor) that is operable independently from or together with the main processor 3021. For example, when the mobile device 3001 includes the main processor 3021 and the auxiliary processor 3023, the auxiliary processor 3023 may be configured to use lower power than the main processor 3021 or be specialized for a designated function. The auxiliary processor 3023 may be implemented separately from or as a part of the main processor 3021.

The auxiliary processor 3023 may, for example, control at least some of functions or states related to at least one component (e.g., the display module 3060, the sensor module 3076, or the communication module 3090) from among the components of the mobile device 3001, instead of the main processor 3021 while the main processor 3021 is in an inactive (e.g., sleep) state, or together with the main processor 3021 when the main processor 3021 is in an active (e.g., application execution) state. According to an embodiment of the invention, the auxiliary processor 3023 (e.g., the image signal processor or communication processor) may be implemented as a part of a functionally related component (e.g., the camera module 3080 or communication module 3090). According to an embodiment of the invention, the auxiliary processor 3023 (e.g., the NPU) may include a hardware structure specialized for processing of an artificial intelligence (AI) model. The Al model may be generated via machine learning. Such learning may be, for example, performed by the mobile device 3001 itself where the Al model is performed, or via a separate server (e.g., the server 3008). Examples of a learning algorithm may include supervised learning, unsupervised learning, semi-supervised learning, and reinforcement learning, but are not limited thereto. The Al model may include a plurality of artificial neural network layers. An artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), a deep Q-network, or a combination thereof, but is not limited thereto. The Al model may include, additionally or alternatively, a software structure, in addition to a hardware structure.

The memory 3030 may store various types of data used by at least one component (e.g., the processor 3020 or sensor module 3076) of the mobile device 3001. The data may include, for example, software (e.g., the program 3040), and input data or output data regarding a command related thereto. The memory 3030 may include the volatile memory 3032 or the nonvolatile memory 3034.

The program 3040 may be stored in the memory 3030 as software, and may include, for example, an operating system 3042, middleware 3044, or an application 3046.

The input module 3050 may receive a command or data to be used in a component (e.g., the processor 3020) of the mobile device 3001 from the outside (e.g., a user) of the mobile device 3001. The input module 3050 may include, for example, a microphone, a mouse, a keyboard, a key (e.g., a button), or a digital pen (e.g., a stylus pen).

The sound output module 3055 may output a sound signal to the outside of the mobile device 3001. The sound output module 3055 may include, for example, a speaker or a receiver. The speaker may be used for a general purpose, such as multimedia reproduction or recording reproduction. The receiver may be used to receive an incoming call. According to an embodiment of the invention, the receiver may be implemented separately from or as a part of the speaker.

The display module 3060 may visually provide information to the outside (e.g., the user) of the mobile device 3001. The display module 3060 may include, for example, a display, a hologram device, or a projector, and a control circuit for controlling a corresponding device. According to an embodiment of the invention, the display module 3060 may include a touch sensor configured to detect a touch, or a pressure sensor configured to measure strength of power generated by the touch.

The audio module 3070 may convert sound into an electric signal or convert an electric signal into sound. According to an embodiment of the invention, the audio module 3070 may obtain sound via the input module 3050 or output sound via the sound output module 3055 or an external electronic device (e.g., the electronic device 3002 (e.g., a speaker or headphone)) connected to the mobile device 3001 directly or wirelessly.

The sensor module 3076 may detect an operating state (e.g., power or temperature) of the mobile device 3001 or an external environment state (e.g., a user state), and generate an electric signal or data value corresponding to the detected state. According to an embodiment of the invention, the sensor module 3076 may include, for example, a gesture sensor, a gyro-sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illumination sensor.

The interface 3077 may support one or more designated protocols that may be used by the mobile device 3001 to be connected to an external electronic device (e.g., the electronic device 3002) directly or wirelessly. According to an embodiment of the invention, the interface 3077 may include, for example, a high-definition multimedia interface (HDMI), a universal serial bus (USB) interface, a secure digital (SD) card interface, or an audio interface.

The connection terminal 3078 may include a connector enabling the mobile device 3001 to be physically connected to an external electronic device (e.g., the electronic device 3002) therethrough. According to an embodiment of the invention, the connection terminal 3078 may include, for example, an HDMI connector, a USB connector, an SD card connector, or an audio connector (e.g., a headphone connector).

The haptic module 3079 may convert an electric signal into a mechanical stimulus (e.g., vibration or motion) or an electric stimulus, which may be recognized by a user via tactile or exercise sense. According to an embodiment of the invention, the haptic module 3079 may include, for example, a motor, a piezoelectric device, or an electric stimulus device.

The camera module 3080 may capture a still image and a moving image. According to an embodiment of the invention, the camera module 3080 may include one or more lenses, image sensors, image signal processors, or flashes.

The power management module 3088 may manage power supplied to the mobile device 3001. According to an embodiment of the invention, the power management module 3088 may be implemented as, for example, at least a part of a power management integrated circuit (PMIC).

The battery 3089 may supply power to at least one component of the mobile device 3001. According to an embodiment of the invention, the battery 3089 may include, for example, a primary battery that is unable to be recharged, a rechargeable secondary battery, or a fuel cell.

The communication module 3090 may support establishment of a direct (e.g., wired) communication channel or wireless communication channel between the mobile device 3001 and an external electronic device (e.g., the electronic device 3002, the electronic device 3004, or the server 3008), and performing of communication via an established communication channel. The communication module 3090 is operated independently from the processor 3020 (e.g., the application processor), and may include one or more communication processors supporting direct (e.g., wired) communication or wireless communication. According to an embodiment of the invention, the communication module 3090 may include a wireless communication module 3092 (e.g., a cellular communication module, a short-range wireless communication module, or a global navigation satellite system (GNSS) communication module), or a wired communication module 3094 (e.g., an LAN communication module or a power line communication module). A corresponding communication module among such communication modules may communicate with the external electronic device 3004 via the first network 3098 (e.g., the short-range wireless communication network, such as Bluetooth, WFD, or IrDA) or the second network 3099 (e.g., the long-range communication network, such as a legacy cellular network, 5G network, next-generation communication network, the Internet, or computer network (e.g., LAN or WAN)). Such various types of communication modules may be integrated into one component (e.g., a single chip) or implemented as a plurality of separate components (e.g., a plurality of chips). The wireless communication module 3092 may identify or authenticate the mobile device 3001 in a communication network, such as the first network 3098 or second network 3099, by using subscriber information (e.g., an international mobile subscriber identifier (IMSI) stored in the subscriber identification module 3096.

The wireless communication module 3092 may support a 5G network beyond 4G network, and next-generation communication technology, for example, new radio (NR) access technology. The NR access technology may support enhanced mobile broadband (eMBB), massive machine type communication (mMTC), or ultra-reliability and low-latency communication (URLLC). The wireless communication module 3092 may support, for example, a high-frequency band (e.g., mmWave band) to achieve a high data rate. The wireless communication module 3092 may support various technologies for securing performance in a high-frequency band, for example, technologies such as beamforming, massive multiple-input and multiple-output (MIMO), full dimensional MIMO (FD-MIMO), array antenna, analog beamforming, and large scale antenna. The wireless communication module 3092 may support various requirements specified by the mobile device 3001, an external electronic device (e.g., the electronic device 3004), or a network system (e.g., the second network 3099). According to an embodiment of the invention, the wireless communication module 3092 may support a peak data rate (e.g., 20 Gbps or greater) for eMBB realization, loss coverage (e.g., 164 dB or less) for mMTC realization, or U-plane latency (e.g., 0.5 ms or less for each downlink (DL) and uplink (UL) or 1 ms or less of round trip) for URLLC realization.

The antenna module 3097 may transmit or receive a signal or power to or from the outside (e.g., an external electronic device). According to an embodiment of the invention, the antenna module 3097 may include an antenna including an emitter consisting of a conductor or conductive pattern formed on a substrate (e.g., a printed circuit board (PCB)). According to an embodiment of the invention, the antenna module 3097 may include a plurality of antennas (e.g., an array antenna). In this case, at least one antenna suitable to a communication method used in a communication network, such as the first network 3098 or second network 3099, may be selected from the plurality of antennas by, for example, the communication module 3090. The signal or power may be transmitted or received between the communication module 3090 and an external electronic device via the at least one selected antenna. According to some embodiments of the invention, a component (e.g., a radio frequency integrated circuit (RFIC) other than the emitter may be additionally provided as a part of the antenna module 3097. According to various embodiments of the invention, the antenna module 3097 may form an mmWave antenna module. According to an embodiment of the invention, the mmWave antenna module may include a printed circuit board, an RFIC capable of supporting a designated high-frequency band (e.g., an mmWave band) and arranged on or adjacent to a first surface (e.g., a bottom surface) of the printed circuit board, and a plurality of antennas (e.g., an array antenna) capable of transmitting or receiving a signal of the designated high-frequency band and arranged on or adjacent to a second surface (e.g., a top surface) of the printed circuit board.

At least some of the components may be connected to each other via a communication method between peripheral devices (e.g., a bus, a general purpose input and output (GPIO), a serial peripheral interface (SPI), or a mobile industry processor interface (MIPI), and may exchange signals (e.g., a command or data).

According to an embodiment of the invention, the command or data may be transmitted or received between the mobile device 3001 and the external electronic device 3004, via the server 3008 connected to the second network 3099. Each external electronic device 3002 or 3004 may be a same or different type of device as or from the mobile device 3001. According to an embodiment of the invention, all or some of operations executed by the mobile device 3001 may be executed by one or more external electronic devices from among the external electronic devices 3002, 3004, or 3008. For example, when the mobile device 3001 is to perform a certain function or service automatically or in response to a request from a user or another device, the mobile device 3001 may request one or more external electronic devices to perform at least a part of the function or service, instead of or in addition to performing the function or service by itself. Upon receiving the request, the one or more external electronic devices may execute at least a part of the requested function or service or an additional function or service related to the request, and transmit a result thereof to the mobile device 3001. The mobile device 3001 may process the result as it is or additionally, and provide the result as at least a part of a response to the request. In this regard, for example, cloud computing, distributed computing, mobile edge computing (MEC), or client-server computing technology may be used. The mobile device 3001 may provide an ultra-low latency service by using, for example, the distributed computing or mobile edge computing. According to an embodiment of the invention, the external electronic device 3004 may include an IoT device. The server 3008 may be an intelligent server using machine learning and/or neural network. According to an embodiment of the invention, the external electronic device 3004 or server 3008 may be included in the second network 3099. The mobile device 3001 may be applied to an intelligence service (e.g., a smart home, a smart city, a smart car, or health care), based on 5G communication technology and loT-related technology.

The term "module" used in various embodiments of the invention may include a unit implemented in hardware, software, or firmware, and for example, may be interchangeably used with a term such as a logic, a logic block, a component, or a circuit. The module may be an integrally configured component, a minimum unit of the component, which perform one or more functions, or a part of the component. For example, according to an embodiment of the invention, the module may be configured in a form of an application-specific integrated circuit (ASIC).

Various embodiments of the invention may be implemented as software (e.g., a program) including one or more instructions stored in a storage medium readable by a machine (e.g., the external device 130, the robot vacuum cleaner 100, the first UWB device 110, or the second UWB device 160). For example, a processor of the machine (e.g., the external device 130, the robot vacuum cleaner 100, the first UWB device 110, or the second UWB device 1600) may invoke at least one instruction from among the one or more instructions stored in the storage medium, and execute the at least one instruction. Accordingly, the machine is enabled to operate to perform at least one function according to the at least one invoked instruction. The one or more instructions may include code generated by a compiler or code executable by an interpreter. The machine-readable storage medium may be provided in a form of a non-transitory storage medium. Here, 'non-transitory' only means that the storage medium is a tangible device and does not contain a signal (for example, electromagnetic waves). This term does not distinguish a case where data is stored in the storage medium semi-permanently and a case where data is stored in the storage medium temporarily.

According to an embodiment of the invention, a method according to various embodiments of the invention may be provided by being included in a computer program product. The computer program products are products that may be traded between sellers and buyers. The computer program product may be distributed in a form of machine-readable storage medium (for example, a compact disc read-only memory (CD-ROM)), or distributed (for example, downloaded or uploaded) through an application store, or directly or online between two user devices (for example, smartphones). In the case of online distribution, at least a part of the computer program product may be at least temporarily stored or temporarily generated in the machine-readable storage medium such as a server of a manufacturer, a server of an application store, or a memory of a relay server.

According to various embodiments of the invention, each component (e.g., module or program) of the above-described components may include a single or plurality of entities, and some of the plurality of entities may be separately arranged in another component. According to various embodiments of the invention, one or more components among the above-described components, or one or more operations may be omitted, or one or more other components or operations may be added. Alternatively or additionally, a plurality of components (e.g., modules or programs) may be integrated into one component. In this case, the integrated component may perform one or more functions of each of the plurality of components in a same or similar manner as a corresponding component among the plurality of components before the integration. According to various embodiments of the invention, operations performed by modules, programs, or other components may be sequentially, parallelly, repetitively, or heuristically executed, one or more of the operations may be executed in a different order or omitted, or one or more other operations may be added.

## Claims

1. A method of controlling a robot vacuum cleaner (100, 2900), the method comprising:
receiving, by a plurality of ultra wideband, UWB, antennas (310, 320, 330, 510, 520, 530, 822, 832, 842), a UWB signal from a first UWB device (110);
obtaining location information about a pet (150) based on the UWB signal received by the plurality of UWB antennas (310, 320, 330, 510, 520,530, 822, 832, 842); and
monitoring the pet (150) based on the location information about the pet (150);
detecting a barking sound of the pet (150) using a microphone (720) of the robot vacuum cleaner (100, 2900);
generating barking monitoring information about the pet (150) based on the barking sound of the pet (150); and
transmitting the monitoring information about the pet (150) to an external device (130) registered in a same account as an account of the robot vacuum cleaner (100, 2900),
wherein the barking monitoring information comprises at least one of information about a time when the barking sound is recognized or location information in which the barking sound is recognized.

2. The method of claim 1, further comprising moving the robot vacuum cleaner (100, 2900) to a periphery of the pet (150) based on the obtained location information about the pet (150).

3. The method of any one of claims 1 and 2, wherein
the first UWB device (110) is mounted on the pet (150), and
the obtaining the location information about the pet (150) comprises:
identifying a location of the first UWB device (110); and
identifying the location of the first UWB device (110) as a location of the pet (150).

4. The method of any one of claims 1 to 3, further comprising:
receiving expected location information about the pet (150) from a second UWB device (160, 1600) that includes a plurality of microphones,
wherein the second UWB device (160, 1600) is configured to generate the expected location information about the pet (150) based on a barking sound detected by the plurality of microphones.

5. The method of claim 4, further comprising:
moving the robot vacuum cleaner (100, 2900) to a location corresponding to the expected location information;
recognizing the pet (150) from a photographed image photographed by the robot vacuum cleaner (100, 2900); and
identifying location information about the pet (150) based on the photographed image and location information about the robot vacuum cleaner (100, 2900).

6. The method of any one of claims 1 to 5, wherein the plurality of UWB antennas (310, 320, 330, 510, 520, 530, 822, 832, 842) are provided in a main body of the robot vacuum cleaner (100, 2900).

7. The method of any one of claims 1 to 6, wherein the plurality of UWB antennas (310, 320, 330, 510, 520, 530, 822, 832, and 842) are provided in a charger (102) of the robot vacuum cleaner (100, 2900).

8. The method of any one of claims 1 to 7, wherein the monitoring of the pet (150) comprises:
photographing the pet (150) using a camera (730) of the robot vacuum cleaner (100, 2900), to thereby produce a photographed image and
transmitting the photographed image to an external device (130) registered in a same account as an account of the robot vacuum cleaner (100, 2900).

9. The method of any one of claims 1 to 8, further comprising:
determining a cleaning region of the robot vacuum cleaner (100, 2900) based on the obtained location information about the pet (150).

10. The method of any one of claims 1 to 9, further comprising:
inputting monitoring information collected by an operation of monitoring the pet (150) into a machine learning model (710, 744); and
obtaining identification information about the pet (150) from the machine learning model (710, 744).

11. The method of any one of claims 1 to 10, further comprising:
activating a monitoring mode of the pet (150), wherein, when the monitoring mode of the pet (150) is activated, the method further comprises:
recording a location of interest at which a barking sound of the pet (150) is detected on a cleaning map, and
when the barking sound of the pet (150) is maintained for more than a reference time, recording the location of interest on the cleaning map at a certain period.

12. The method of claim 11, further comprising:
when the monitoring mode of the pet (150) is activated, transmitting to an external device (130) when the barking sound of the pet (150) is detected within a reference distance from a pet-related location related to the pet (150) recorded on the cleaning map,
wherein the pet-related location comprises at least one of a feeding location (1810c), a pet house location (1810a), or a pet relief location (1810b).

13. A robot vacuum cleaner (100, 2900) comprising:
an ultra wideband, UWB, communication module (212, 230, 412, 414) comprising a plurality of UWB antennas (310, 320, 330, 510, 520, 530, 822, 832 842);
a moving assembly (214, 2970);
a memory (216, 2940, 3030) storing at least one instruction; and
at least one processor (210, 410, 2990, 3020) configured to execute the at least one instruction to:
receive, by the plurality of UWB antennas (310, 320, 330, 510, 520, 530, 822, 832, 842), a UWB signal from a first UWB device (110),
obtain location information about a pet (150) based on the UWB signal received by the plurality of UWB antennas (310, 320, 330, 510, 520, 530, 822, 832, 842), and
monitor the pet (150) based on the location information about the pet (150),
detect a barking sound of the pet (150) using a microphone (720) of the robot vacuum cleaner (100, 2900),
generate barking monitoring information about the pet (150) based on the barking sound of the pet (150), and
transmit the monitoring information about the pet (150) to an external device (130) registered in a same account as an account of the robot vacuum cleaner (100, 2900),
wherein the barking monitoring information comprises at least one of information about a time when the barking sound is recognized or location information in which the barking sound is recognized.

14. A computer-readable recording medium having stored therein a program (3040) performing the method of any one of claims 1 to 12 in a computer.

## Patentansprüche

1. Verfahren zum Steuern eines Roboterstaubsaugers (100, 2900), wobei das Verfahren Folgendes umfasst:
Empfangen, durch eine Vielzahl von Ultrabreitband-, UWB, -Antennen (310, 320, 330, 510, 520, 530, 822, 832, 842), eines UWB-Signals von einer ersten UWB-Vorrichtung (110);
Erhalten von Standortinformationen über ein Haustier (150) basierend auf dem UWB-Signal, das durch die Vielzahl von UWB-Antennen (310, 320, 330, 510, 520, 530, 822, 832, 842) empfangen wird; und
Überwachen des Haustiers (150) basierend auf den Standortinformationen über das Haustier (150);
Detektieren eines Bellgeräusches des Haustieres (150) unter Verwendung eines Mikrofons (720) des Roboterstaubsaugers (100, 2900);
Erzeugen von Bellüberwachungsinformationen über das Haustier (150) basierend auf dem Bellgeräusch des Haustiers (150); und
Übertragen der Überwachungsinformationen über das Haustier (150) an eine externe Vorrichtung (130), die in einem gleichen Konto wie einem Konto des Roboterstaubsaugers (100, 2900) registriert ist,
wobei die Bellüberwachungsinformationen mindestens eines von Informationen über ein Zeit, zu der das Bellgeräusch erkannt wird, oder Standortinformationen, in denen das Bellgeräusch erkannt wird, umfassen.

2. Verfahren nach Anspruch 1, ferner umfassend Bewegen des Roboterstaubsaugers (100, 2900) zu einer Peripherie des Haustiers (150) basierend auf den erhaltenen Standortinformationen über das Haustier (150).

3. Verfahren nach einem der Ansprüche 1 und 2, wobei
die erste UWB-Vorrichtung (110) an dem Haustier (150) montiert ist, und
das Erhalten der Standortinformationen über das Haustier (150) Folgendes umfasst:
Identifizieren eines Standorts der ersten UWB-Vorrichtung (110); und
Identifizieren des Standorts der ersten UWB-Vorrichtung (110) als Standort des Haustiers (150).

4. Verfahren nach einem der Ansprüche 1 bis 3, ferner umfassend:
Empfangen von erwarteten Standortinformationen über das Haustier (150) von einer zweiten UWB-Vorrichtung (160, 1600), die eine Vielzahl von Mikrofonen beinhaltet,
wobei die zweite UWB-Vorrichtung (160, 1600) konfiguriert ist, um die erwarteten Standortinformationen über das Haustier (150) basierend auf einem Bellgeräusch zu erzeugen, das durch die Vielzahl von Mikrofonen detektiert wird.

5. Verfahren nach Anspruch 4, ferner umfassend:
Bewegen des Roboterstaubsaugers (100, 2900) an einen Standort, der den erwarteten Standortinformationen entspricht;
Erkennen des Haustieres (150) anhand eines aufgenommenen Bildes, das durch den Roboterstaubsauger (100, 2900) aufgenommen wurde; und
Identifizieren von Standortinformationen über das Haustier (150) basierend auf dem aufgenommenen Bild und Standortinformationen über den Roboterstaubsauger (100, 2900).

6. Verfahren nach einem der Ansprüche 1 bis 5, wobei die Vielzahl von UWB-Antennen (310, 320, 330, 510, 520, 530, 822, 832, 842) in einem Hauptkörper des Roboterstaubsaugers (100, 2900) vorgesehen ist.

7. Verfahren nach einem der Ansprüche 1 bis 6, wobei die Vielzahl von UWB-Antennen (310, 320, 330, 510, 520, 530, 822, 832 und 842) in einem Ladegerät (102) des Roboterstaubsaugers (100, 2900) vorgesehen ist.

8. Verfahren nach einem der Ansprüche 1 bis 7, wobei das Überwachen des Haustieres (150) Folgendes umfasst:
Aufnehmen des Haustiers (150) mit einer Kamera (730) des Roboterstaubsaugers (100, 2900), um dadurch ein aufgenommenes Bild zu produzieren, und
Übertragen des aufgenommenen Bildes an eine externe Vorrichtung (130), die in einem gleichen Konto wie einem Konto des Roboterstaubsaugers (100, 2900) registriert ist.

9. Verfahren nach einem der Ansprüche 1 bis 8, ferner umfassend:
Bestimmen eines Reinigungsbereichs des Roboterstaubsaugers (100, 2900) basierend auf den erhaltenen Standortinformationen über das Haustier (150).

10. Verfahren nach einem der Ansprüche 1 bis 9, ferner umfassend:
Eingeben von Überwachungsinformationen, die durch einen Vorgang zum Überwachen des Haustiers (150) gesammelt wurden, in ein Modell des maschinellen Lernens (710, 744); und
Erhalten von Identifikationsinformationen über das Haustier (150) von dem Modell des maschinellen Lernens (710, 744).

11. Verfahren nach einem der Ansprüche 1 bis 10, ferner umfassend:
Aktivieren eines Überwachungsmodus des Haustieres (150), wobei, wenn der Überwachungsmodus des Haustieres (150) aktiviert ist, das Verfahren ferner Folgendes umfasst:
Aufzeichnen eines Standorts von Interesse, an dem ein Bellgeräusch des Haustiers (150) detektiert wird, auf einer Reinigungskarte, und
wenn das Bellgeräusch des Haustiers (150) länger als eine Referenzzeit anhält, Aufzeichnen des Standorts von Interesse auf der Reinigungskarte in einem bestimmten Zeitraum.

12. Verfahren nach Anspruch 11, ferner umfassend:
wenn der Überwachungsmodus des Haustiers (150) aktiviert ist, Übertragen an eine externe Vorrichtung (130), wenn das Bellgeräusch des Haustiers (150) innerhalb eines Referenzabstands von einem haustierbezogenen Standort detektiert wird, der sich auf das Haustier (150) bezieht und auf der Reinigungskarte aufgezeichnet ist,
wobei der haustierbezogene Standort mindestens einen von einem Futterstandort (1810c), einem Haustierschlafstandort (1810a) oder einem Haustiertoilettenstandort (1810b) umfasst.

13. Roboterstaubsauger (100, 2900), umfassend:
ein Ultrabreitband-, UWB, -Kommunikationsmodul (212, 230, 412, 414), das eine Vielzahl von UWB-Antennen (310, 320, 330, 510, 520, 530, 822, 832, 842) umfasst;
eine Bewegungsbaugruppe (214, 2970);
einen Speicher (216, 2940, 3030), der mindestens eine Anweisung speichert; und
mindestens einen Prozessor (210, 410, 2990, 3020) der konfiguriert ist, um die mindestens eine Anweisung auszuführen zum:
Empfangen, durch die Vielzahl von UWB-Antennen (310, 320, 330, 510, 520, 530, 822, 832, 842), eines UWB-Signals von einer ersten UWB-Vorrichtung (110),
Erhalten von Standortinformationen über ein Haustier (150) basierend auf dem UWB-Signal, das durch die Vielzahl von UWB-Antennen (310, 320, 330, 510, 520, 530, 822, 832, 842) empfangen wird, und
Überwachen des Haustiers (150) basierend auf den Standortinformationen über das Haustier (150),
Detektieren eines Bellgeräusches des Haustieres (150) unter Verwendung eines Mikrofons (720) des Roboterstaubsaugers (100, 2900),
Erzeugen von Bellüberwachungsinformationen über das Haustier (150) basierend auf dem Bellgeräusch des Haustiers (150), und
Übertragen der Überwachungsinformationen über das Haustier (150) an eine externe Vorrichtung (130), die in einem gleichen Konto wie einem Konto des Roboterstaubsaugers (100, 2900) registriert ist,
wobei die Bellüberwachungsinformationen mindestens eines von Informationen über ein Zeit, zu der das Bellgeräusch erkannt wird, oder Standortinformationen, in denen das Bellgeräusch erkannt wird, umfassen.

14. Computerlesbares Aufzeichnungsmedium, auf dem ein Programm (3040) zum Durchführen des Verfahrens nach einem der Ansprüche 1 bis 12 in einem Computer gespeichert ist.

## Revendications

1. Procédé de commande d'un aspirateur robot (100, 2900), le procédé comprenant :
recevoir, par une pluralité d'antennes à bande ultra large, UWB, (310, 320, 330, 510, 520, 530, 822, 832, 842), un signal UWB provenant d'un premier dispositif UWB (110) ;
obtenir des informations de lieu concernant un animal domestique (150) sur la base du signal UWB reçu par la pluralité d'antennes UWB (310, 320, 330, 510, 520,530, 822, 832, 842) ; et
surveiller l'animal domestique (150) en se basant sur les informations de lieu concernant l'animal domestique (150) ;
détecter un aboiement de l'animal domestique (150) à l'aide d'un microphone (720) de l'aspirateur robot (100, 2900) ;
générer des informations de surveillance d'aboiement de l'animal domestique (150) en se basant sur l'aboiement de l'animal domestique (150) ; et
transmettre les informations de surveillance concernant l'animal domestique (150) à un dispositif externe (130) enregistré sur un même compte qu'un compte de l'aspirateur robot (100, 2900),
dans lequel les informations de surveillance d'aboiement comprennent au moins une d'informations sur le moment où le son d'aboiement est reconnu ou d'informations sur le lieu où le son d'aboiement est reconnu.

2. Procédé de la revendication 1, comprenant en outre déplacer l'aspirateur robot (100, 2900) vers une périphérie de l'animal domestique (150) en se basant sur les informations de lieu obtenues concernant l'animal domestique (150).

3. Procédé de l'une quelconque des revendications 1 et 2, dans lequel
le premier dispositif UWB (110) est monté sur l'animal domestique (150), et
obtenir les informations de lieu concernant l'animal domestique (150) comprend :
identifier le lieu du premier dispositif UWB (110) ; et
identifier le lieu du premier dispositif UWB (110) en tant que lieu de l'animal domestique (150).

4. Procédé de l'une des revendications 1 à 3, comprenant en outre :
recevoir des informations de lieu attendues concernant l'animal domestique (150) à partir d'un deuxième dispositif UWB (160, 1600) qui comprend une pluralité de microphones,
dans lequel le deuxième dispositif UWB (160, 1600) est configuré pour générer les informations de lieu attendues concernant l'animal domestique (150) en se basant sur un son d'aboiement détecté par la pluralité de microphones.

5. Procédé de la revendication 4, comprenant en outre :
déplacer l'aspirateur robot (100, 2900) vers un lieu correspondant aux informations de lieu attendues ;
reconnaître l'animal domestique (150) à partir d'une image photographiée par l'aspirateur robot (100, 2900) ; et
identifier des informations de lieu concernant l'animal domestique (150) en se basant sur l'image photographiée et des informations de lieu concernant l'aspirateur robot (100, 2900).

6. Procédé de l'une quelconque des revendications 1 à 5, dans lequel la pluralité d'antennes UWB (310, 320, 330, 510, 520, 530, 822, 832, 842) est prévue dans un corps principal de l'aspirateur robot (100, 2900).

7. Procédé de l'une quelconque des revendications 1 à 6, dans lequel la pluralité d'antennes UWB (310, 320, 330, 510, 520, 530, 822, 832 et 842) est prévue dans un chargeur (102) de l'aspirateur robot (100, 2900).

8. Procédé de l'une quelconque des revendications 1 à 7, dans lequel la surveillance de l'animal domestique (150) comprend :
photographier l'animal domestique (150) à l'aide d'un appareil photo (730) de l'aspirateur robot (100, 2900) pour produire ainsi une image photographiée et
transmettre l'image photographiée à un dispositif externe (130) enregistré sur un même compte qu'un compte de l'aspirateur robot (100, 2900).

9. Procédé de l'une des revendications 1 à 8, comprenant en outre :
déterminer une région de nettoyage de l'aspirateur robot (100, 2900) en se basant sur les informations de lieu obtenues concernant l'animal domestique (150).

10. Procédé de l'une des revendications 1 à 9, comprenant en outre :
entrer des informations de surveillance recueillies par une opération de surveillance de l'animal domestique (150) dans un modèle d'apprentissage automatique (710, 744) ; et
obtenir des informations d'identification concernant l'animal domestique (150) à partir du modèle d'apprentissage automatique (710, 744).

11. Procédé de l'une des revendications 1 à 10, comprenant en outre :
activer un mode de surveillance de l'animal domestique (150), dans lequel, lorsque le mode de surveillance de l'animal domestique (150) est activé, le procédé comprend en outre :
enregistrer un lieu d'intérêt au niveau duquel un son d'aboiement de l'animal domestique (150) est détecté sur une carte de nettoyage, et
lorsque le son d'aboiement de l'animal domestique (150) est maintenu pendant plus d'une période de référence, enregistrer le lieu d'intérêt sur la carte de nettoyage à un certain niveau.

12. Procédé de la revendication 11, comprenant en outre :
lorsque le mode de surveillance de l'animal domestique (150) est activé, transmettre à un dispositif externe (130) le moment où le son d'aboiement de l'animal domestique (150) est détecté à l'intérieur d'une distance de référence d'un lieu lié à l'animal domestique (150) enregistré sur la carte de nettoyage,
dans lequel le lieu lié à l'animal domestique comprend au moins un d'un lieu d'alimentation (1810c), d'un lieu d'hébergement d'animal domestique (1810a), ou d'un lieu de soulagement d'animal domestique (1810b).

13. Aspirateur robot (100, 2900), comprenant :
un module de communication à bande ultra large (UWB) (212, 230, 412, 414) comprenant une pluralité d'antennes UWB (310, 320, 330, 510, 520, 530, 822, 832 842) ;
un ensemble mobile (214, 2970) ;
une mémoire (216, 2940, 3030) stockant au moins une instruction ; et
au moins un processeur (210, 410, 2990, 3020) configuré pour exécuter au moins une instruction afin de :
recevoir, par la pluralité d'antennes UWB (310, 320, 330, 510, 520, 530, 822, 832, 842), un signal UWB provenant d'un premier dispositif UWB (110),
obtenir des informations de lieu concernant un animal domestique (150) sur la base du signal UWB reçu par la pluralité d'antennes UWB (310, 320, 330, 510, 520, 530, 822, 832, 842), et
surveiller l'animal domestique (150) en se basant sur les informations de lieu concernant l'animal domestique (150),
détecter un aboiement de l'animal domestique (150) à l'aide d'un microphone (720) de l'aspirateur robot (100, 2900),
générer des informations de surveillance d'aboiement de l'animal domestique (150) en se basant sur l'aboiement de l'animal domestique (150) ; et
transmettre les informations de surveillance concernant l'animal domestique (150) à un dispositif externe (130) enregistré sur un même compte qu'un compte de l'aspirateur robot (100, 2900),
dans lequel les informations de surveillance d'aboiement comprennent au moins une d'informations sur le moment où le son d'aboiement est reconnu ou d'informations sur le lieu où le son d'aboiement est reconnu.

14. Support d'enregistrement lisible par ordinateur sur lequel est stocké un programme (3040) exécutant le procédé de l'une quelconque des revendications 1 à 12 dans un ordinateur.
